# EUROPÄISCHE PATENTSCHRIFT

(11) **EP 0 761 307 B1**
(45) Veröffentlichungstag und Bekanntmachung des Hinweises auf die Patenterteilung: **05.02.2003**
(21) Anmeldenummer: 96114468.0
(22) Anmeldetag: 10.09.1996
(51) Int. Cl.: B01J 35/10, B01J 37/00

(54) **Monomodale und polymodale Katalysatorträger und Katalysatoren mit engen Porengrössenverteilungen und deren Herstellverfahren**
Monomodal and polymodal catalyst supports and catalysts with a narrow pore size distribution and method for producing the same
Supports de catalyseur et catalyseurs, monomodales et polymodales, avec une distribution des dimensions de pores étroite et procédé pour sa fabrication

(30) Priorität: 12.09.1995 DE 19533486
(43) Veröffentlichungstag der Anmeldung: 12.03.1997
(73) Patentinhaber: BASF AKTIENGESELLSCHAFT, 67056 Ludwigshafen (DE)
(72) Erfinder: Trübenbach, Peter, Dr., 67065 Ludwigshafen (DE); Hagemeyer, Alfred, Dr., 67063 Ludwigshafen (DE); Lauth, Günther, Prof. Dr., 23909 Ratzenburg (DE); Dingerdissen, Uwe, Dr., 64342 Seeheim-Jugenheim (DE); Bröcker, Franz Josef, Dr., 67061 Ludwigshafen (DE); Flick, Klemens, Dr., 76863 Herxheim (DE)
(74) Vertreter: Isenbruck, Günter, Dr.

(56) Entgegenhaltungen:
- EP-A- 0 349 223
- EP-A- 0 444 475
- EP-A- 0 603 990
- EP-A- 0 764 467
- DD-A- 292 149
- DE-A- 4 128 629
- US-A- 4 314 913
- US-A- 4 352 923
- US-A- 5 322 821
- Hagen Jens, Technische Katalyse: eine Einführung, VCH, Weinheim, 1996, p. 225.
- Römpp Chemie Lexikon, 9. Auflage, 1992, Georg Thieme Verlag Stuttgart, p. 3587

## Beschreibung

Die vorliegende Erfindung betrifft Katalysatorträger und Katalysatoren mit einer engen Porengrößenverteilung, Verfahren zu deren Herstellung und deren Verwendungen.

Aus der US-A-5 191 144 sind Zeolithe mit einer sehr einheitlichen, im Mesoporenbereich 2 Bis 50 mm) variierbaren Porengröße zwischen 2 und 10 mm nm durch Hydrothermalsynthese bekannt. Aufgrund der geringen Porengröße ist die Größe der umsetzbaren Moleküle beschränkt. Da bei Zeolithen ein SiO₂-Binder verwendet wird, sind diese Zeolithe nur bis 700°C stabil und über 400°C nicht chemikalienbeständig, und ihre mechanische Beständigkeit ist schlecht. Die Zeolithe haben darüber hinaus sehr saure Oberflächen, wodurch ihre Anwendung auf sauer katalysierte Reaktionen beschränkt ist.

Aus Chem. Ind., 10 (1993) 48 bis 49 ist ein Verfahren zur Herstellung von Katalysatorträgern im Mesoporenbereich (2 bis 50 nm) aus pyrogenen Oxiden (SiO₂, Al₂O₃, TiO₂, ZrO₂) durch Umsetzung der Halogenide in der Knallgasflamme bekannt, deren Porengrößen zwischen 10 und 70 nm liegen, wobei keine Poren im Bereich kleiner 8 nm resultieren. Die Porenverteilungen sind jedoch breit gestreut.

Aus der Chem. Ing. Tech., 56 (1984) 455 bis 463 ist Melamin als Makroporenbildner bekannt. Die Pyrolyse führt jedoch zu Rißbildungen.

Aus der US-A-3,755,204 sind poröse Keramikkörper durch Formen einer Mischung aus Keramikpulver, einem Polyolefin (Polyethylencopolymer) und eines Weichmachers (Mineralöl, Diethylenglykol, Polyvinylalkohol, Polyvinylpyrrolidon) bekannt, die durch Pyrolyse und Sintern hergestellt werden. Die bei der Pyrolyse auftretenden Risse im Keramikkörper können durch Extraktion des Weichmachers mit wässrigen Tensid-Lösungen vermieden werden (DE-A-24 59 475). Hierbei handelt es sich um keramische Wabenkörper, bei denen die offenen Poren als Kanalstrukturen durch die thermoplastische Formgebung eingebracht werden.

Aus der DE-A-24 59 475 ist ein Verfahren zur Herstellung von geformten porösen Metallstrukturen bekannt, bei dem ein Gemisch aus Metallpulver, Polyolefin und einem Weichmacher compoundiert und der Weichmacher vor der Pyrolyse aus dem Gemisch mit einem Lösungsmittel herausgelöst wird.

Aus der DE-A-41 20 687 sind poröse Sinterteile aus Metall oder Keramik, mit einem Polyolefin, einem Weichmacher und einem Zusatzstoff, der nicht mit dem Bindersystem mischbar ist, bekannt. Der Zusatzstoff ist ein vinylaromatisches Copolymer auf Basis von Polysryrol, das mit einer Teilchengröße von 20 bis 250 µm als Platzhalter zwischen den Metall- oder Keramikteilchen eingebracht wird. Durch eine Variation der Zusatzstoff-Teilchengröße lassen sich unterschiedliche aber nicht spezifizierte Porengrößen herstellen. Die Porengrößenverteilung ist bimodal und breit gestreut, da die Poren einerseits durch die Teilchengrößenverteilung des Zusatzstoffes und andererseits durch die Zwischenräume der Metall- oder Keramikteilchen gebildet werden.

Aus der EP-A-446 708 ist die Herstellung von dichten metallischen Formteilen und aus der EP-A-444 475 die Herstellung von dichten keramischen Formkörpern über die Verformung von thermoplastischen Massen bekannt.

Aus der EP-A-413 231 ist ein Verfahren zur Herstellung von dichten anorganischen Sinterformteilen bekannt, wobei Grünkörper aus sinterbaren Pulvern und Polyoxymethylen oder einem Copolymerisat mit überwiegendem Anteil an Oxymethyleinheiten als Binder durch Extrusion, Spritzgießen oder Strangpressen geformt werden. Das Bindemittel wird aus diesen Grünteilen durch Behandlung mit einer gasförmigen Säure oder Bortrifluorid schnell, rißfrei und verzugsfrei entfernt. Die entbinderten porösen Teile haben eine geringe mechanische Stabilität und werden zu vollständiger Dichte gesintert. Über diesen Weg werden kompliziert geformte, dichte, keramische oder metallische Strukturwerkstoffe oder Funktionswerkstoffe hergestellt, die sich nicht als Katalysatorträger oder Katalysatoren eignen.

Sinterbare organische Polymere, wie Teflon (EP-A-513 500), Polyamid oder nichtplastifizierbare Polymere (EP-A-517 025) können mit diesem Herstellverfahren auch zu dichten Bauteilen verarbeitet werden.

Aus der DE-A-41 20 687 ist bekannt, daß es sehr schwierig ist, mit den bekannten Verfahren aus sehr feinen Metall- oder Keramikpulvern (Teilchengröße ca. 1 µm) reproduzierbar mechanisch stabile Teile mit gleichbleibender Porenverteilung herzustellen.

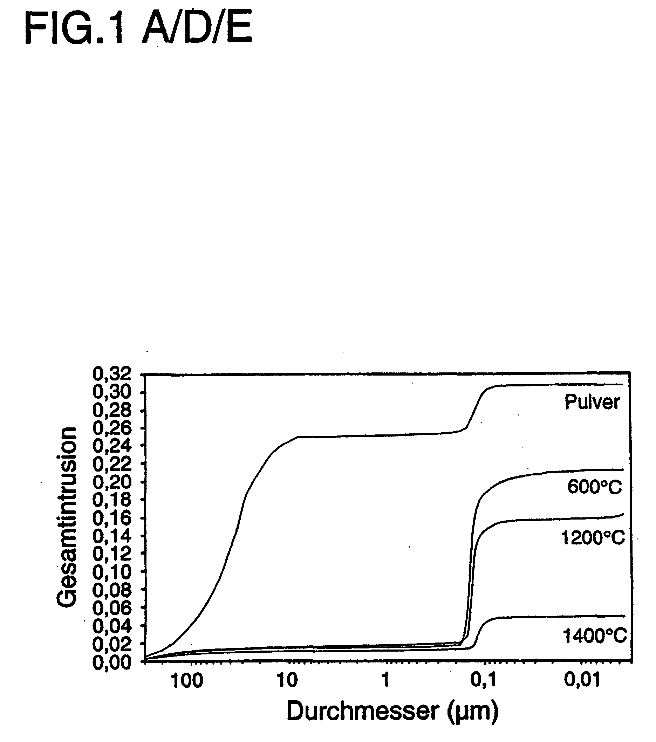

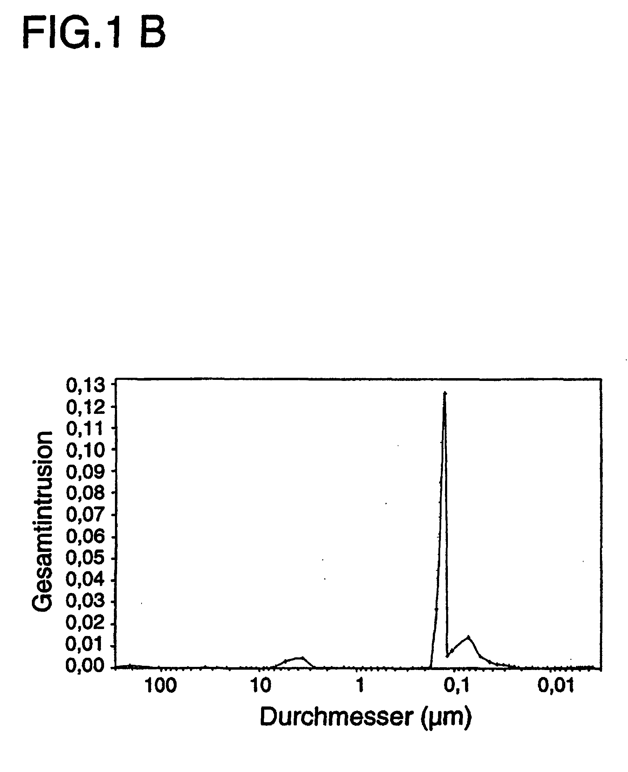

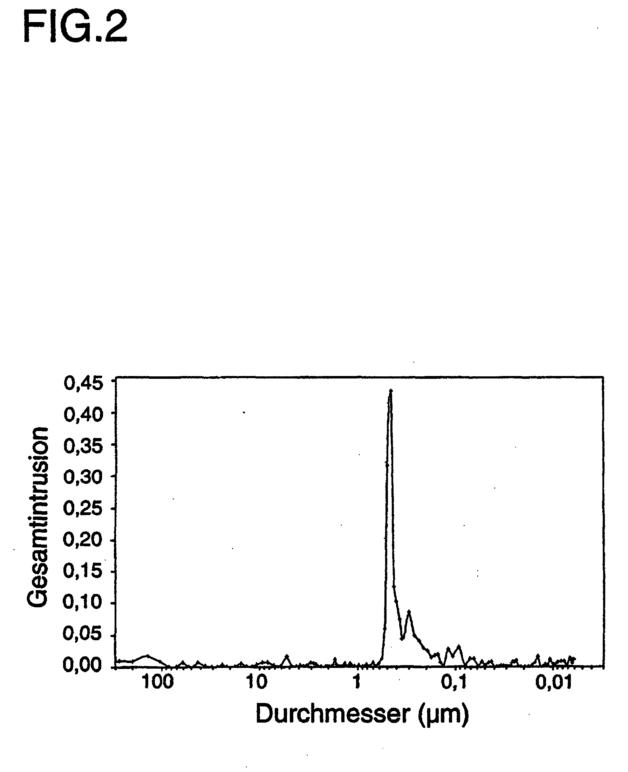

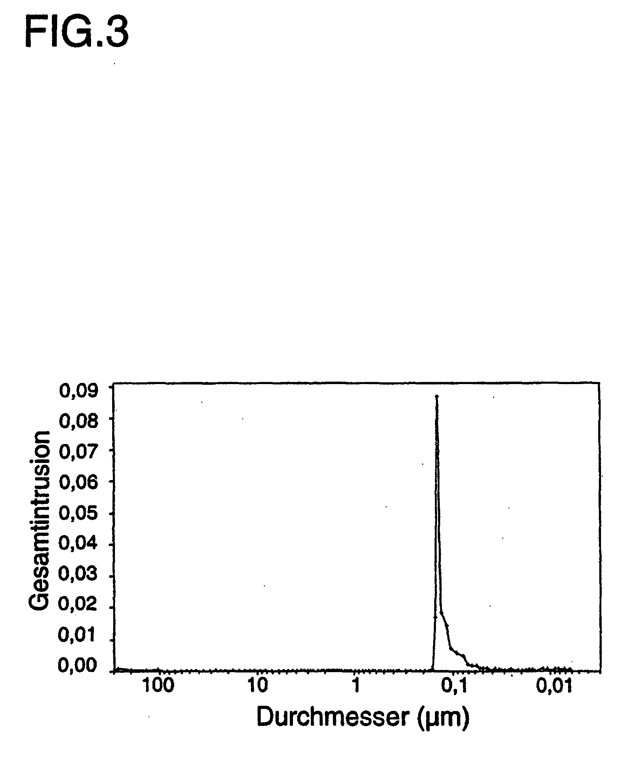

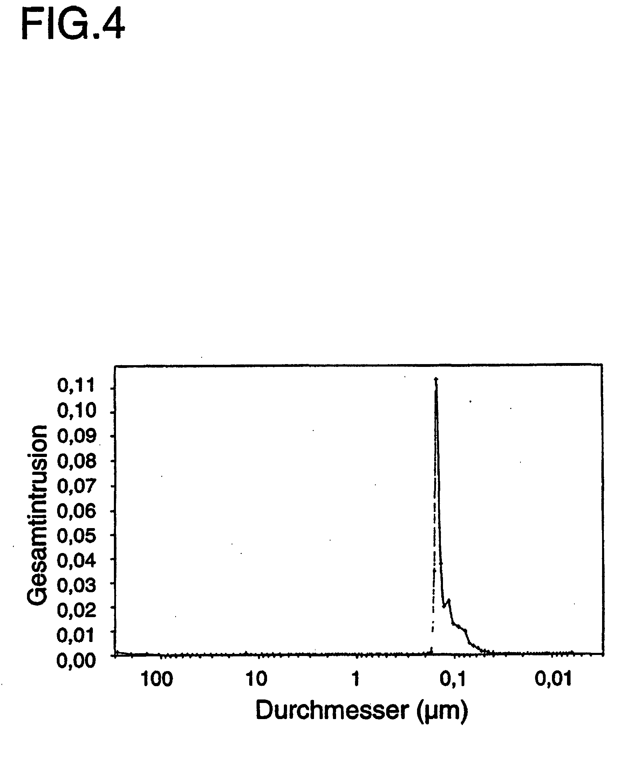

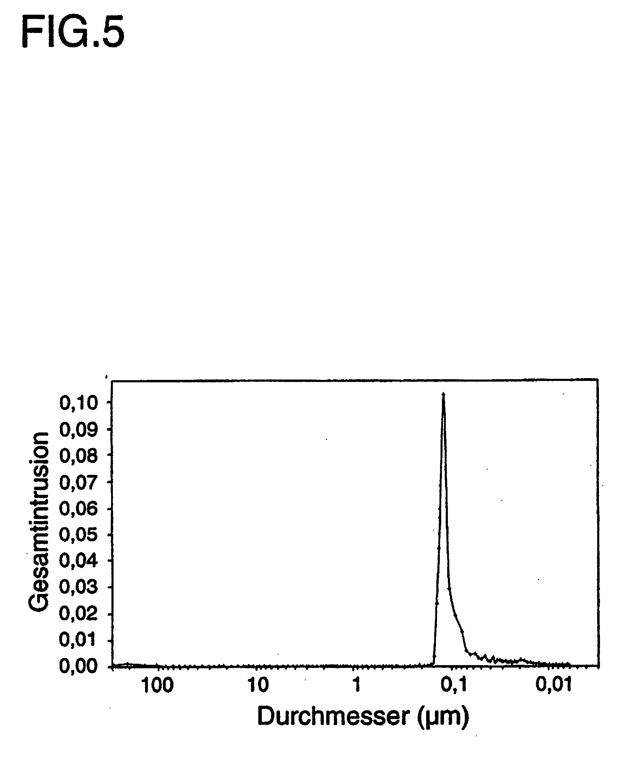

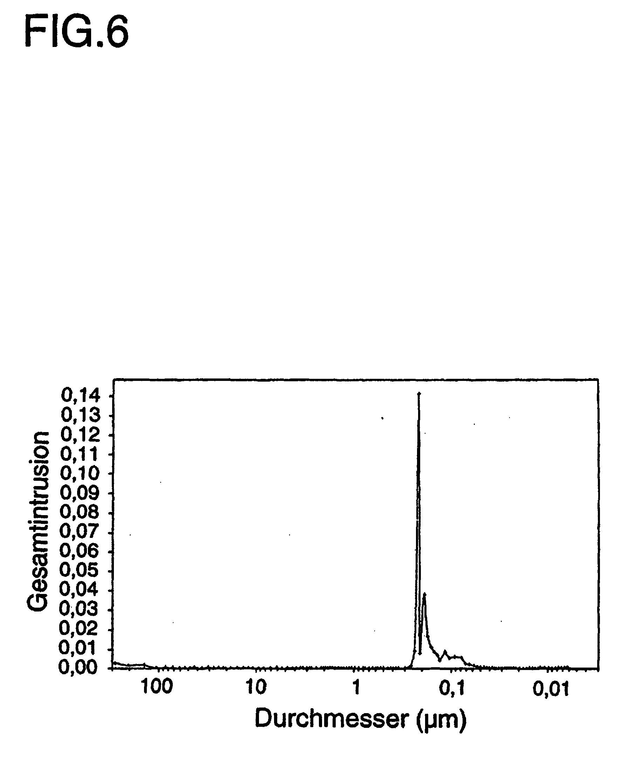

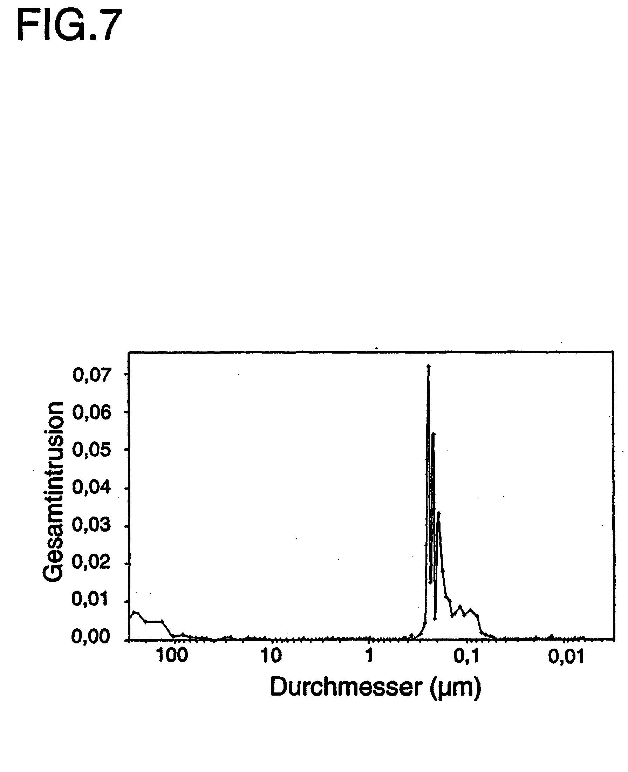

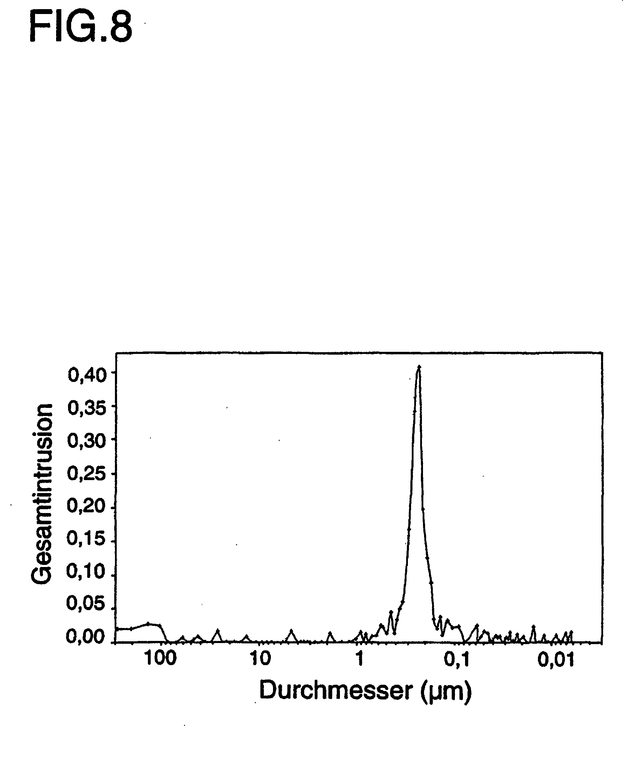

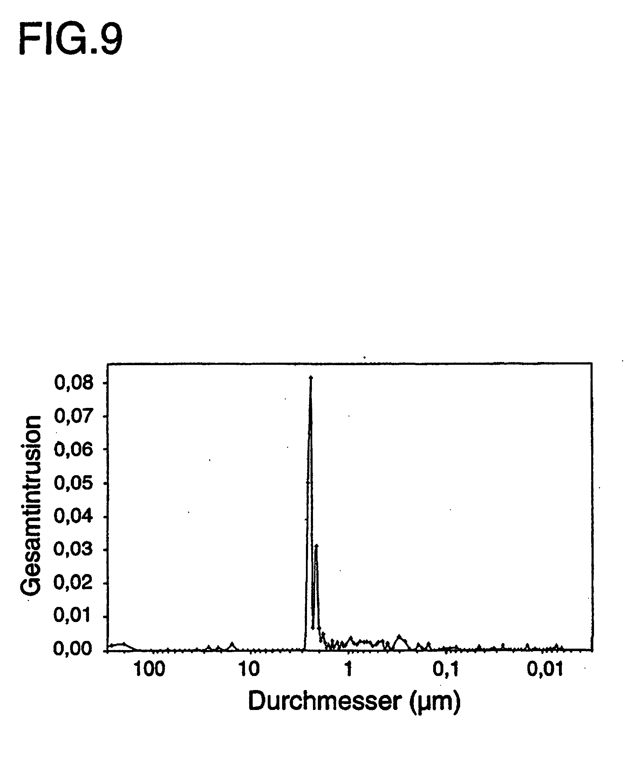

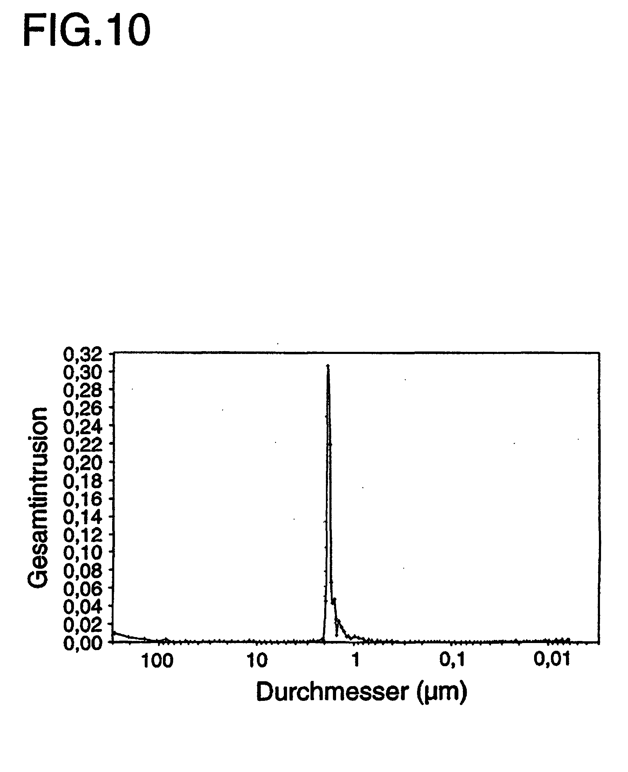

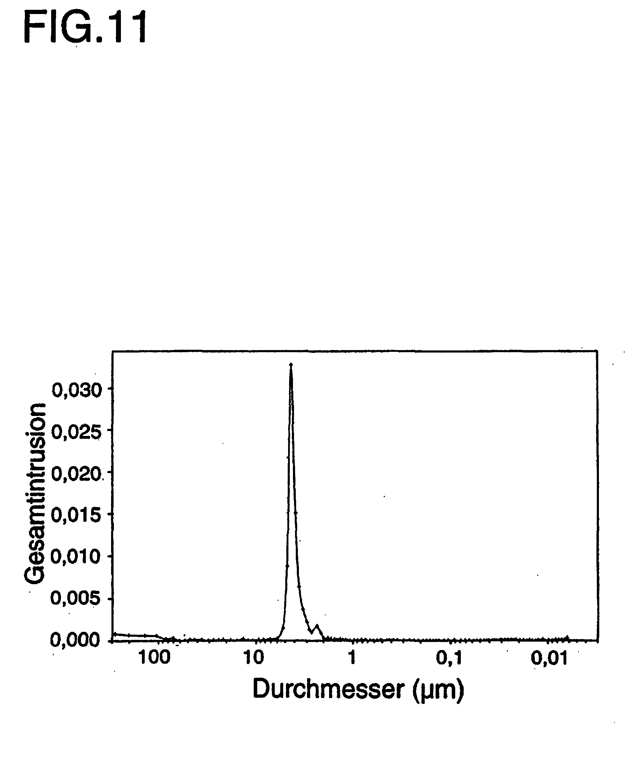

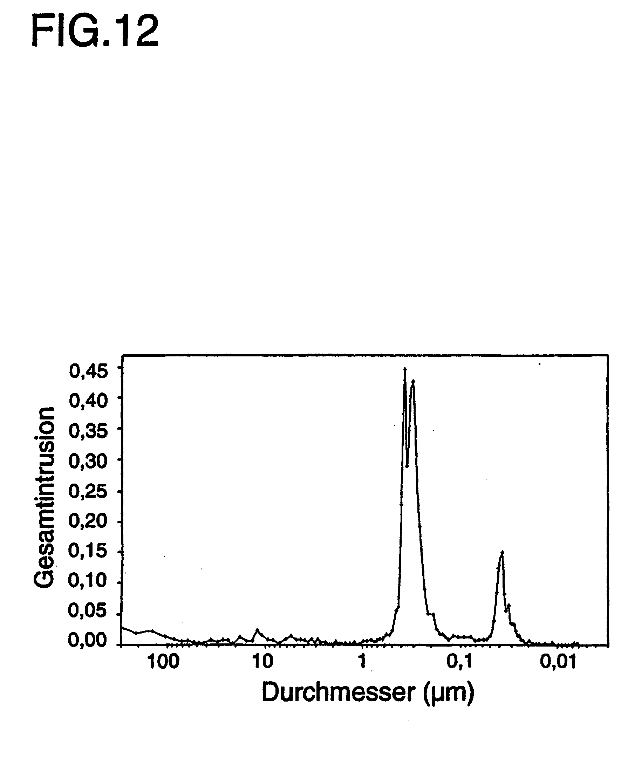

DE-A-41 28 629 betrifft silberhaltige Aluminiumoxidträger-Katalysatoren für die selektive Zersetzung von reinem oder in Gasgemischen enthaltenem Distickstoffmonoxid. Bei den Trägermaterialien handelt es sich um käufliches oder nach üblichen Methoden hergestelltes Aluminiumoxid mit einer BET-Oberfläche von 26 bis 350 m²/g. In den Figuren 1 und 2 sind die Porengrößenverteilungen eingesetzter handelsüblicher Aluminiumoxid-Träger dargestellt Dabei handelt es sich um Trägermaterialien mit im wesentlichen bimodaler Porengrößenverteilung, wobei die Porengrößenverteilung verhältnismäßig breit ist.

Der vorliegenden Erfindung lag daher die Aufgabe zugrunde, den zuvor genannten Nachteilen abzuhelfen.

Demgemäß wurden neue und verbesserte monomodale oder polymodale Katalysatorträger oder Katalysatoren gefunden, welche dadurch gekennzeichnet sind, daß die Katalysatorträger oder Katalysatoren eine spezifische Oberfläche nach BET von 0,01 bis 250 m²/g ein Porenvolumen von 0,05 bis 5 ml/g, eine Schneidhärte von 1 bis 8 kg bei bei 800°C vorgesinterten Proben und eine monomodale oder eine polymodale Porengrößenverteilung mit einem mittleren Porendurchmesser von 50 bis 300.000 nm gemessen mit der Hg-Druckporosimetrie-Methode aufweisen und
a) 10 bis 95% des Porenvolumens bei dem 0,1- bis 3-fachen und/ oder
b) 10 bis 80% des Porenvolumens bei dem 0,4- bis 3-fachen und/ oder
c) 50 bis 95% des Porenvolumens bei dem 0,1- bis 1-fachen und/ oder
d) 50 bis 80% des Porenvolumens bei dem 0,4- bis 1-fachen des mittleren Porendurchmessers liegt und
e) die Halbwertsbreite der Porengrößenverteilung weniger als das 0,5-fache des modalen Porendurchmessers beträgt,
sowie
ein Verfahren zu deren Herstellung durch Verformen eines Gemisches aus
A) 15 bis 70 Vol.-%
   I) eines anorganischen Pulvers ausgewählt aus der Gruppe der Oxide, Nitride, Carbide, Silikate, Alumosilikate der Elemente Beryllium, Magnesium, Calcium, Strontium, Barium, Bor, Aluminium, Gallium, Indium, Thallium, Silicium, Germanium, Zinn, Blei, Antimon, Selen, Tellur, Polonium, Astat, Eisen, Cobalt, Nickel, Ruthenium, Rhodium, Palladium, Osmium, Iridium, Platin, Kupfer, Silber, Gold, Zink, Cadmium, Quecksilber, Scandium, Yttrium, Lanthan, Actinium, Titan, Zirkon, Hafnium, Vanadin, Niob, Tantal, Chrom, Molybdän, Wolfram, Mangan, Technetium, Rhenium, Cer, Praseodym oder deren Gemische und/oder
   II) eines metallischen Pulvers ausgewählt aus Metallen und Legierungen der Elemente Bor, Aluminium, Gallium, Indium, Thallium, Silicium, Germanium, Zinn, Blei, Antimon, Selen, Tellur, Polonium, Neodym, Samarium, Dysprosium, Astat, Eisen, Cobalt, Raney-Cobalt, Nickel, Raney-Nickel, Ruthenium, Rhodium, Palladium, Osmium, Iridium, Platin, Kupfer, Silber, Gold, Zink, Cadmium, Quecksilber, Scandium, Yttrium, Lanthan, Actinium, Titan, Zirkon, Hafnium, Vanadin, Niob, Tantal, Chrom, Molybdän, Wolfram, Mangan, Technetium, Rhenium, Cer, Praseodym, WC, TiC, TaC, VC oder deren Gemische, WC-Cobalt, TiC-Cobalt, TaC-Cobalt, VC-Cobalt oder deren Gemische sowie Kohlenstoff und/oder
   III) einer Aktivkomponente ausgewählt aus der Gruppe der anorganischen Säuren, der Metalle ausgewählt aus Lithium, Natrium, Kalium, Rubidium, Caesium, Francium, Beryllium, Magnesium, Calcium, Strontium, Barium, Bor, Aluminium, Gallium, Indium, Thallium, Silicium, Germanium, Zinn, Blei, Arsen, Antimon, Wismut, Selen, Tellur, Polonium, Astat, Eisen, Cobalt, Raney-Cobalt, Nikkel, Raney-Nickel, Ruthenium, Rhodium, Palladium, Osmium, Iridium, Platin, Kupfer, Silber, Gold, Zink, Cadmium, Quecksilber, Scandium, Yttrium, Lanthan, Actinium, Titan, Zirkon, Hafnium, Vanadin, Niob, Tantal, Chrom, Molybdän, Wolfram, Mangan, Technetium, Rhenium, Cer, Praseodym, deren Gemische, oder deren Boraten, Carbonaten, Silikaten, Nitraten, Phosphaten, Arsenaten, Antimonaten, Bismutaten, Sulfaten, Selenaten, Telluraten, Vanadaten, Molybdaten, Niobaten, Chromaten, Oxiden, Hydroxiden, Halogeniden, Sulfiden, Seleniden, Telluriden, Nitriden, Phosphiden, Arseniden, Acetate, Acetylacetonate, Palladate, Platinate, Cyanide, Rhodanide, Manganate, Rhenate, Osmate, Carbiden, Siliciden, Boriden, deren Ammoniumverbindungen oder deren Gemische und/oder
   IV) eines organischen Pulvers ausgewählt aus der Gruppe Teflon oder Polyimid
B) 30 bis 85 Vol.-% einer Mischung aus
   B₁) 50 bis 100 Gew.-% eines Polyoxymethylenhomo- oder copolymerisats und
   B₂) 0 bis 50 Gew.-% eines in B1) homogen gelösten oder mit einer mittleren Teilchengröße von weniger als 1 µm in B1) dispergierten Polymerisats und
C) 0 bis 15 Vol.-% eines Dispergierhilfsmittels,

Entfernen des Bindemittels und anschließendes Vorsintern und gegebenenfalls Aufbringen von Aktivkomponenten III auf der Komponente A) oder auf der vorgesinterten Masse durch gegebenenfalls mehrfaches Tränken, Imprägnieren, Sprühimprägnieren, Auffällen, Hicoaten, Washcoaten oder Sprühtrocknen, dadurch gekennzeichnet, daß die Komponente A) ein nanokristallines Pulver mit einer mittleren Korngröße von 5 nm bis 500.000 nm ist, wobei die Abweichungen der Komgröße bei 80% der Kömer 0 bis 30% der mittleren Korngröße betragen und das Bindemittel durch Behandlung mit einer gasförmigen Säure bei Temperaturen von 100 bis 160°C, Restpyrolyse bei Temperaturen von 400 bis 600°C entfernt wird und anschließend bei Temperaturen von 600 bis 1400°C vorgesintert wird und die Katalysatorträger oder Katalysatoren nach der pyrolytischen Entfernung des Binders eine spezifische Oberfläche nach BET von 0,01 bis 250 m²/g und eine Porengrößenverteilung von 50 bis 300.000 nm gemessen mit der Hg-Druckporosimetrie-Methode aufweisen, sowie deren Verwendung zur Chlorherstellung aus Chlorwasserstoff in einem instationären Deacon-Prozeß, zur Umsetzung von Ethylbenzol zu Styrol in einer instationären Oxi-Dehydrierung, zur Aziridinherstellung aus Ethanolamin, zur Umsetzung von Trimethylcyclohexenon zu Trimethylphenol, bei Reduktionen, Hydrierungen, Oxidationen, Dehydrierungen, sauer oder basisch katalysierten Reaktionen oder Reaktionen in der Wirbelschicht, zur Entfernung von Verbrennungsrückständen aus Dieselabgasen und zur Entfernung von NOₓ aus Abgasen, in Bioreaktoren gemeinsam mit Bakterien und als Biokatalysatorträger mit immobilisierten Enzymen oder Mikroben.

Die erfindungsgemäßen Katalysatorträger oder Katalysatoren sind bevorzugt nicht zeolithisch und haben eine spezifische Oberfläche nach BET von 0,01 bis 250 m²/g, bevorzugt 0,1 bis 200 m²/g, besonders bevorzugt 0,5 bis 120 m²/g und eine monomodale oder eine polymodale, also eine bimodale, trimodale, tetramodale oder höhermodale, bevorzugt eine bimodale, trimodale oder tetramodale, besonders bevorzugt eine bimodale oder trimodale Porengrößenverteilung mit einem mittleren Porendurchmesser von 50 bis 300.000 nm, bevorzugt 100 bis 50.000 nm, besonders bevorzugt 150 bis 25.000 nm gemessen mit der Hg-Druckporosimetrie-Methode aufweisen und
a) 10 bis 95%, bevorzugt 30 bis 95%, besonders bevorzugt 50 bis 95% des Porenvolumens bei dem 0,1- bis 3-fachen und/oder
b) 10 bis 80%, bevorzugt 30 bis 80%, besonders bevorzugt 50 bis 80% des Porenvolumens bei dem 0,4- bis 3-fachen und/oder
c) 50 bis 95%, bevorzugt 70 bis 95%, besonders bevorzugt 80 bis 95% des Porenvolumens bei dem 0,1- bis 1-fachen und/oder
d) 50 bis 80%, bevorzugt 60 bis 80%, besonders bevorzugt 65 bis 80% des Porenvolumens bei dem 0,4- bis 1-fachen des mittleren Porendurchmessers liegt und
e) die Halbwertsbreite der Porengrößenverteilung weniger als das 0,5-fache, also das 0,001- bis 0,49-fache, bevorzugt das 0,005- bis 0,4-fache, besonders bevorzugt das 0,1-bis 0,3-fache des modalen Porendurchmessers beträgt.

Unter den erfindungsgemäßen Katalysatorträgern oder Katalysatoren sind diejenigen bevorzugt, bei denen die Bedingungen a) und b) oder a) und c) oder a) und d) oder b) und c) oder b) und d) oder c) und d) gleichzeitig erfüllt sind, besonders bevorzugt sind diejenigen, bei denen die Bedingungen a), b) und c) oder a), b) und d) oder a), c) und d) oder b), c) und d) gleichzeitig erfüllt sind, insbesondere diejenigen Katalysatorträger oder Katalysatoren, bei denen alle vier Bedingungen a), b), c) und d) gleichzeitig erfüllt sind.

Die erfindungsgemäßen Katalysatorträger oder Katalysatoren können wie folgt hergestellt werden:

In einer Mischvorrichtung, bevorzugt mit Heizvorrichtung, beispielsweise einem Kneter, einem Extruder oder einem Scherwalzenextruder kann dem Polymer der Komponente B) in geschmolzenem Zustand bei Temperaturen von 80 bis 250°C, bevorzugt 100 bis 220°C, besonders bevorzugt 120 bis 200°C die Komponente A), die anorganischen, metallischen, organischen Pulver und/oder die Aktivkomponenten und dann das Dispergierhilfsmittel der Komponente C) oder zuerst Komponente C) und dann Komponente A) oder die Komponenten A) und C) gemeinsam zugegeben werden. Die innig (intensiv) vermischten Massen können z.B. durch Granulieren, Pressen, Walzen, Extrusion, Verstrangen oder Spritzgießen, insbesondere durch Spritzgießen bei Temperaturen von 120 bis 250°C, bevorzugt 140 bis 220°C, besonders bevorzugt 150 bis 200°C und Drücken von 500 bis 2000 bar, bevorzugt 600 bis 1800 bar, besonders bevorzugt 700 bis 1600 bar verformt werden. Dabei können in einem Formgebungsschritt bei Spritzgießformtemperaturen von 40 bis 160°C, bevorzugt 60 bis 150°C, besonders bevorzugt 80 bis 140°C, beliebig geformte Katalysatorträger oder Katalysatoren als Schüttung von Einzelteilen oder als Monolithe wie beispielsweise Raschig-Ringe, Sattelkörper, Sternringe, gelochte und/oder gerippte geometrische Körper wie Ringe, Kugeln, Quader, Würfel, Kegel, Pyramiden, Prismen, Oktaeder, Zylinder, Pyramidenstümpfe und Kegelstümpfe, in der Regel ohne Nachbearbeitung hergestellt werden.

Wägenräderprofile, Honigwabenprofile, Fensterrahmenprofile können bei Temperaturen von 120 bis 250°C, besonders bevorzugt bei 150 bis 200°C zu Monolithen extrudiert werden.

Die nach dem Formgebungsvorgang erhaltenen Grünkörper können in einer gasförmigen, säurehaltigen Atmosphäre bei Temperaturen von 100 bis 160°C, bevorzugt 100 bis 150°C, besonders bevorzugt unter der Erweichungstemperatur des Polyacetals (Komponente B), katalytisch entbindert werden.

Die entformten Grünlinge werden erfindungsgemäß in einer (gasförmigen) säurehaltigen Atmosphäre zwecks Entfernung des Bindemittels behandelt. Unter (gasförmigen) säurehaltigen Atmosphären können sowohl reine Säure verstanden werden, die bei den Behandlungstemperaturen gasförmig vorliegen, es können aber auch darunter Mischungen von Säuren mit einem Trägergas verstanden werden. Als Trägergase kommen beispielsweise Luft oder Stickstoff oder Edelgase in Betracht. Als Säuren kommen die anorganischen Säuren in Betracht, die bei Raumtemperatur gasförmig sind, z.B. die Halogenwasserstoffe, Schwefelwasserstoff oder solche Säuren, die bei den Behandlungstemperaturen in merklichem Umfang verdampfbar sind, z.B. Salpetersäure.

Als organische Säuren kommen grundsätzlich solche Säuren oder Säuregemische in Betracht, die einen Siedepunkt oder Sublimationspunkt bei Normaldruck von unter 130°C haben, z.B. Oxalsäure, Ameisensäure, Essigsäure oder Trifluoressigsäure.

Anstelle der gasförmigen, säurehaltigen Atmosphäre können aber die entformten Grünlinge auch in einer gasförmigen, Bortrifluorid enthaltenden Atmosphäre zwecks Entfernung des Bindemittels behandelt werden. Unter gasförmigen, Bortrifluorid enthaltenden Atmosphären kann sowohl reines Bortrifluorid verstanden werden, es können aber auch darunter Mischungen von Bortrifluorid mit einem Trägergas verstanden werden. Als Trägergase kommen beispielsweise Luft oder Stickstoff oder Edelgase in Betracht.

Anstelle von Bortrifluorid können selbstverständlich auch Addukte von Bortrifluorid verwendet werden, die bei den Behandlungstemperaturen reversibel und ohne Zersetzung der Komponenten wieder in die Ausgangskomponenten gespalten werden können. Insbesondere geeignet sind die Additionsverbindungen des Bortrifluorids mit Ether, z.B. Dimethylether, Diethylether, Dibutylether und tert.-Butylmethylether.

Besonders bevorzugt sind Salpetersäure, wasserfreie Oxalsäure oder Oxalsäuredihydrat. Weiterhin eignet sich Glyoxalsäure. Außerdem kommen Benzolsulfonsäure, die Naphthalinsulfonsäuren und Maleinsäure oder Gemische dieser Säuren in Betracht. Diese können sowohl für sich allein oder auch zusammen mit einem Trägergas wie Luft, Stickstoff oder einem Edelgas bei der Entbinderung eingesetzt werden.

Zur Erleichterung der Dosierung kann es zweckmäßig sein, die obengenannten Säuren als Lösung in polaren Lösungsmitteln, vorzugsweise mit Siedepunkten unter 200°C, einzusetzen. Als solche kommen vor allem Wasser, Isopropanol, Aceton, Dioxan, Ethanol, Essigsäure und Ameisensäure in Betracht.

Die säurekatalysierte Entbinderung kann bei Normaldruck oder bei vermindertem Druck 1·10² bis 1·10⁵ Pa (0,001 bis 1 bar) durchgeführt werden.

Durch anschließendes Vorsintern, bei Temperaturen von 600 bis 1400°C, bevorzugt 600 bis 1100°C, besonders bevorzugt bei 600 bis 800°C unter oxidierenden Bedingungen (Luft), Inertgas (N₂, Ar, He) oder reduzierenden Bedingungen (N₂/H₂, Ar/H₂) kann der Formkörper zu den Katalysatorträgern oder Katalysatoren mit ihrer endgültigen Festigkeit und Porenverteilung umgewandelt werden. Durch den Vorsinterprozeß erhöht sich in der Regel die Stabilität und die Härte der porösen Formkörper beträchtlich. Die Schneidehärte der bei 800°C vorgesinterten Proben beträgt 1 bis 8 kg (800°C), bevorzugt 1,5 bis 7 kg (800°C), besonders bevorzugt 2 bis 6 kg (800°C). Bei mit 1100°C vorgesinterten Proben wurden Schneidhärten bis zu 20 kg erreicht. Die Wasseraufnahme liegt im Bereich von 0,05 bis 5 ml/g, bevorzugt 0,1 bis 3 ml/g, besonders bevorzugt 0,1 bis 1 ml/g, so daß mehr Aktivkomponente auf einen erfindungsgemäßen Katalysatorträger aufgebracht werden kann, ohne in der Regel wesentliche Einbußen in der Härte zu erzielen. Durch die ausgezeichnete Aktivkomponentenaufnahme können die Katalysatoren nach Gebrauch durch Nachtränken der Aktivkomponenten gut recycliert werden.

Neben streng monomodalen Porengrößenverteilungen können so auch polymodale (bimodale, trimodale, tetramodale und höhermodale) Porengrößenverteilungen hergestellt werden. Mit diesem Verfahren können Katalysatorträger und Katalysatoren mit einer hohen Festigkeit und einer hohen thermischen bzw. chemischen Stabilität hergestellt werden. Als Geometrien der Formkörper sind alle Formen denkbar, die über Granulierung, Walzen, Pressen, Strangpressen, Extrusion oder Spritzguß herstellbar sind. Die Formkörper können als Schüttgut oder in Form von Monolithen bei katalytischen Reaktoren eingesetzt werden.

Die spezifischen Oberflächen nach BET der erfindungsgemäßen Katalysatorträger und Katalysatoren liegen bei 0,01 bis 250 m²/g, bevorzugt 0,1 bis 150 m²/g, besonders bevorzugt 1 bis 100 m²/g, insbesondere 2 bis 8 m²/g (800°C).

Die mittlere Porengröße wird in der Regel von der Korngröße der Komponente A), der anorganischen, metallischen, organischen Pulver und/oder der Aktivkomponenten in der Regel nur durch die Zwischenräume der eingesetzten Pulverteilchen bestimmt. Die mittlere Porengröße und die Porengrößenverteilung sind deshalb von der mittleren Korngröße und der Teilchengrößenverteilung des eingesetzten Pulvers abhängig. Mit kommerziell erhältlichen Metall- oder Keramikpulvern können auf diese Weise mechanisch stabile, rißfreie, monomodal oder polymodal poröse Materialien, wie die erfindungsgemäßen Katalysatorträger oder Katalysatoren, hergestellt werden. Die enge Porengrößenverteilung kann somit je nach Bedarf im Meso- und Makroporenbereich eingestellt werden und führt in der Regel zu einer hoch monodispersen Porenverteilung.

Sofern polymodale Katalysatorträger oder Katalysatoren erhalten werden sollen, setzt man Pulver mit polymodaler Korngrößenverteilung oder mit innerer Porosität ein.

Die mittlere Korngröße der erfindungsgemäß eingesetzten Pulver der Komponente A) ist ein nanokristallines Pulver von 5 nm bis 500.000 nm, bevorzugt 300 nm bis 100.000 nm, besonders bevorzugt 500 nm bis 50.000 nm, wobei die Abweichungen der Korngröße bei 80%, bevorzugt 90%, besonders bevorzugt 95% der Körner 0 bis 30%, bevorzugt 0 bis 20%, besonders bevorzugt 0 bis 10% von der mittleren Korngröße beträgt.

Als Komponente A) eignen sich:
I) ein anorganisches Pulver ausgewählt aus der Gruppe der Oxide, Nitride, Carbide, Silikate, Alumosilikate der Elemente Beryllium, Magnesium, Calcium, Strontium, Barium, Bor, Aluminium, Gallium, Indium, Thallium, Silicium, Germanium, Zinn, Blei, Antimon, Selen, Tellur, Polonium, Astat, Eisen, Cobalt, Nickel, Ruthenium, Rhodium, Palladium, Osmium, Iridium, Platin, Kupfer, Silber, Gold, Zink, Cadmium, Quecksilber, Scandium, Yttrium, Lanthan, Actinium, Titan, Zirkon, Hafnium, Vanadin, Niob, Tantal, Chrom, Molybdän, Wolfram, Mangan, Technetium, Rhenium, Cer, Praseodym oder deren Gemische, bevorzugt Oxide, Nitride, Carbide, Silikate der Elemente Magnesium, Calcium, Strontium, Barium, Bor, Aluminium, Silicium, Zinn, Blei, Antimon, Eisen, Cobalt, Nickel, Ruthenium, Rhodium, Palladium, Platin, Kupfer, Silber, Gold, Zink, Yttrium, Lanthan, Titan, Zirkon, Vanadin, Niob, Tantal, Chrom, Molybdän, Wolfram, Mangan, Cer oder deren Gemische, besonders bevorzugt Oxide, Nitride, Carbide, der Elemente Magnesium, Calcium, Strontium, Barium, Bor, Aluminium, Silicium, Zinn, Antimon, Eisen, Cobalt, Nickel, Kupfer, Yttrium, Titan, Zirkon, Vanadin, Niob, Tantal, Chrom, Molybdän, Wolfram, Mangan oder deren Gemische,
II) ein metallisches Pulver ausgewählt aus Metallen und Legierungen der Elemente Bor, Aluminium, Gallium, Indium, Thallium, Silicium, Germanium, Zinn, Blei, Antimon, Selen, Tellur, Polonium, Neodym, Samarium, Dysprosium, Astat, Eisen, Cobalt, Raney-Cobalt, Nickel, Raney-Nickel, Ruthenium, Rhodium, Palladium, Osmium, Iridium, Platin, Kupfer, Silber, Gold, Zink, Cadmium, Quecksilber, Scandium, Yttrium, Lanthan, Actinium, Titan, Zirkon, Hafnium, Vanadin, Niob, Tantal, Chrom, Molybdän, Wolfram, Mangan, Technetium, Rhenium, Cer, Praseodym, WC, TiC, TaC, VC oder deren Gemische, WC-Cobalt, TiC-Cobalt, TaC-Cobalt, VC-Cobalt oder deren Gemische sowie Kohlenstoff, bevorzugt Metallen und Legierungen der Elemente Bor, Aluminium, Silicium, Zinn, Blei, Antimon, Selen, Neodym, Samarium, Dysprosium, Eisen, Cobalt, Raney-Cobalt, Nickel, Raney-Nickel, Palladium, Platin, Kupfer, Silber, Gold, Zink, Yttrium, Lanthan, Titan, Zirkon, Vanadin, Niob, Tantal, Chrom, Molybdän, Wolfram, Mangan, Cer, WC, TiC, TaC, VC oder deren Gemische, WC-Cobalt, TiC-Cobalt, TaC-Cobalt, VC-Cobalt oder deren Gemische sowie Kohlenstoff, besonders bevorzugt Metallen und Legierungen der Elemente Bor, Aluminium, Silicium, Zinn, Neodym, Samarium, Dysprosium, Eisen, Cobalt, Raney-Cobalt, Nickel, Raney-Nickel, Kupfer, Zink, Yttrium, Titan, Zirkon, Vanadin, Niob, Tantal, Chrom, Molybdän, Wolfram, Mangan, WC, TiC, TaC, VC oder deren Gemische, WC-Cobalt, TiC-Cobalt, TaC-Cobalt, VC-Cobalt oder deren Gemische,
III) eine Aktivkomponente ausgewählt aus der Gruppe der anorganischen Säuren, insbesondere H₂SO₄, H₃PO₄, HNO₃ und Heteropolysäuren, der Metalle ausgewählt aus Lithium, Natrium, Kalium, Rubidium, Caesium, Francium, Beryllium, Magnesium, Calcium, Strontium, Barium, Bor, Aluminium, Gallium, Indium, Thallium, Silicium, Germanium, Zinn, Blei, Arsen, Antimon, Bismut, Selen, Tellur, Polonium, Astat, Eisen, Cobalt, Raney-Cobalt, Nickel, Raney-Nickel, Ruthenium, Rhodium, Palladium, Osmium, Iridium, Platin, Kupfer, Silber, Gold, Zink, Cadmium, Quecksilber, Scandium, Yttrium, Lanthan, Actinium, Titan, Zirkon, Hafnium, Vanadin, Niob, Tantal, Chrom, Molybdän, Wolfram, Mangan, Technetium, Rhenium, Cer, Praseodym, deren Gemische, oder deren Borate, Carbonate, Silikate, Nitrate, Phosphate, Arsenate, Antimonate, Bismutate, Sulfate, Selenate, Tellurate, Vanadate, Molybdate, Niobate, Chromate, Oxide, Hydroxide, Halogenide, Sulfide, Selenide, Telluride, Nitride, Phosphide, Arsenide, Acetate, Acetylacetonate, Palladate, Platinate, Cyanide, Rhodanide, Manganate, Rhenate, Osmate, Carbide, Silicide, Boride, deren Ammoniumverbingungen oder deren Gemische, bevorzugt Metalle ausgewählt aus Lithium, Natrium, Kalium, Caesium, Magnesium, Calcium, Strontium, Barium, Bor, Aluminium, Silicium, Zinn, Blei, Arsen, Antimon, Bismut, Selen, Tellur, Polonium, Eisen, Cobalt, Rancy-Cobalt, Nickel, Raney-Nickel, Ruthenium, Rhodium, Palladium, Osmium, Iridium, Platin, Kupfer, Silber, Gold, Zink, Yttrium, Lanthan, Titan, Zirkon, Vanadin, Niob, Tantal, Chrom, Molybdän, Wolfram, Mangan, Rhenium, Cer, deren Gemische, oder deren Borate, Carbonate, Silikate, Nitrate, Phosphate, Arsenate, Antimonate, Bismutate, Sulfate, Selenate, Vanadate, Molybdate, Niobate, Chromate, Oxide, Hydroxide, Halogenide, Sulfide, Selenide, Telluride, Nitride, Phosphide, Arsenide, Acetate, Acetylacetonate, Palladate, Platinate, Manganate, Carbiden, Siliciden, Boriden, deren Ammoniumverbingungen oder deren Gemische, besonders bevorzugt Metalle ausgewählt aus Lithium, Natrium, Kalium, Caesium, Magnesium, Calcium, Strontium, Barium, Aluminium, Silicium, Zinn, Blei, Arsen, Antimon, Bismut, Eisen, Cobalt, Nickel, Ruthenium, Rhodium, Palladium, Platin, Kupfer, Silber, Zink, Titan, Zirkon, Vanadin, Niob, Tantal, Chrom, Molybdän, Wolfram, Mangan, Cer, deren Gemische, oder deren Carbonate, Silikate, Nitrate, Phosphate, Arsenate, Antimonate, Bismutate, Sulfate, Vanadate, Molybdate, Niobate, Chromate, Oxide, Hydroxide, Halogenide, Sulfide, Nitride, Carbide, deren Ammoniumverbindungen oder deren Gemische.

Vorzugsweise werden als Metall Aluminium, Eisen, Cobalt, Nickel, Palladium, Platin, Kupfer, Silber, Molybdän, Zink, Titan, Zirkon, Wolfram, Niob, Chrom oder Kohlenstoff oder als anorganisches Pulver Al₂O₃, MgO, SiO₂, TiO₂, Y₂O₃, ZrO₂, ZnO, Fe₃O₄, Fe₂O₃, CoO, Co₂O₃, Cr₂O₃, NiO, B₂O₃, Ce₂O₃, CeO₂, Pr₂O₃, B₄C, SiC, WC, TiC, TaC, Si₃N₄, AlN, BN, TiN, ZrN, oder deren Gemische, weiter bevorzugt als Metall Eisen, Cobalt, Nickel, Chrom, Molybdän, Titan oder als anorganisches Pulver SiC, Si₃N₄, BN, B₄C, WC, TiC, TiN, ZrN und AlN, oder deren Gemische und insbesondere als anorganisches Pulver SiC, Si₃N₄ oder deren Gemische eingesetzt.

Sollen Vollkatalysatoren hergestellt werden, so beinhaltet die Komponente A) nur Aktivkomponenten III) und ggf. IV), eines organischen Pulvers ausgewählt aus der Gruppe Teflon oder Polyimid.

Als Komponente B) eignen sich:
B₁) 50 bis 100 Gew.-%, bevorzugt 70 bis 90 Gew.-%, besonders bevorzugt 80 bis 88 Gew.-% eines Polyoxymethylenhomo- oder copolymerisats wie sie aus EP-A-444 475 bekannt sind und
B₂) 0 bis 50 Gew.-%, bevorzugt 10 bis 30 Gew.-%, besonders bevorzugt 12 bis 25 Gew.-% eines in B1) homogen gelösten oder mit einer mittleren Teilchengröße von weniger als 1 µm in B1) dispergierten Polymerisats, bevorzugt Poly-1,3-dioxolan, Poly-1,3-dioxan, Poly-1,3-dioxepan, besonders bevorzugt Poly-1,3-dioxepan.

Als organische Binder eignen sich Polyacetalbinder, beispielsweise Polyoxymethylen, das vorteilhaft eine Molmasse von 10.000 bis 500.000 aufweist. Neben Homopolymerisaten von Formaldehyd oder Trioxan kommen auch Copolymerisate aus Trioxan mit z.B. cyclischen Ethern wie Ethylenoxid und 1,3-Dioxolan oder Formalen wie 1,3-Dioxepan, 1,3-Dioxan, oder deren Mischungen oder homopolymeres Poly-1,3-dioxolan, Poly-1,3-dioxan, oder Poly-1,3-dioxepan in Betracht, wobei die Mengen der Copolymeren im allgemeinen bei 10 bis 30 Gew.-% der Polymeren liegen.

Außerdem können sie Hilfsmittel, wie thermoplastische Binder, wie Polyethylen, Polymethylmethacrylat oder Polyethylenoxid und Dispergatoren bzw. Schmiermittel, wie Polyethylenglykol, Stearinsäure, Fettalkohole, Polyvinylpyrrolidon oder Polyvinylalkohol enthalten. Die Menge an Hilfsmittel liegt in der Regel zwischen 0,1 und 12 Gew.-% der Gesamtmasse.

Als Komponente C) eignen sich Dispergierhilfsmittel wie sie aus EP-A-444 475 bekannt sind, beispielsweise organische Carbonsäuren, Amine, Amide oder Maleinimide, Stearinsäure, Polyvinylpyrrolidon, Polyvinylalkohol, Polyethylenglykol, Polypropylenglykol, Polyethylenoxid und Montanwachse, bevorzugt organische Carbonsäuren, Amine, Amide oder Maleinimide, Polyethylenglykol und Polyethylenoxid, besonders bevorzugt organische Carbonsäuren, Amine, Maleinimide, Polyethylenglykol und Polyethylenoxid.

Die zur Herstellung (Zusammenmischung) der erfindungsgemäßen Katalysatorträger oder Katalysatoren eingesetzten Gemische enthalten oder bestehen in der Regel aus 15 bis 70 Gew.-%, bevorzugt 30 bis 70 Gew.-%, besonders bevorzugt 50 bis 65 Gew.-% Komponente A), aus 30 bis 85 Gew.-%, bevorzugt 30 bis 70 Gew.-%, besonders bevorzugt 35 bis 50 Gew.-% Komponente B) und aus 0 bis 15 Gew.-%, bevorzugt 1 bis 12 Gew.-%, besonders bevorzugt 2 bis 8 Gew.-% Komponente C).

Als Trägermaterialien eignen sich keramische, metallische oder organische Pulver aus AI, II und IV.

Die Aktivkomponenten können im Falle des Vollkatalysators direkt als Pulver eingesetzt oder im Falle von Trägerkatalysatoren auf das anorganische Pulver I), das metallische Pulver II), das organische Pulver IV) oder deren Gemische, oder nachträglich auf das Trägermaterial aufgebracht, oder zusammen mit dem Trägermaterial compoundiert werden.

Weiterhin können den Massen anorganische oder organische Fasern oder Whisker aus z.B. Al₂O₃, SiO₂, SiC, Si₃N₄, C oder deren Gemische zugesetzt werden.

Bei dem erfindungsgemäßen Herstellverfahren werden in der Regel mit Hilfe eines Dispergators C) die Komponenten A) desagglomeriert und die damit einheitlich großen Ausgangspulverpart mit einem vergleichsweise hohen Füllgrad in einen organischen Binder [Komponente B)] eingearbeitet. Der organische Binder füllt die in der Regel nahezu einheitlich großen und regelmäßig angeordneten Zwischenräume der Pulverpartikel. Die bei dem Ausgangspulver der Komponente A) durch Agglomeratbildung vorhandenen Makroporen im Bereich um 100 µm werden durch die Desagglomerierung in der Regel aufgehoben. Nach der Entfernung des organischen Binders und des organischen Dispergators bleiben bei Einsatz von Pulvern mit einer engen monomodalen Korngrößenverteilung streng einheitlich große Poren zwischen den Pulverteilchen zurück. In der Regel beträgt der mittlere Porendurchmesser 25% des mittleren Korndurchmessers des eingesetzten Pulvers (s. Tabelle IIIa [dm/kg]). Beim Einsatz von Pulvern mit polymodaler Korngrößenverteilung oder beim Einsatz von porösen Pulvern können auch polymodale (bimodale, trimodale, tetramodale oder höhermodale) Porenverteilungen hergestellt werden, wobei die Porengröße durch die Zwischenräume zwischen den Pulverteilchen und durch die innere Porosität der Pulverteilchen bedingt ist.

Die erfindungsgemäßen Katalysatoren können heterogene Trägerkatalysatoren oder Vollkatalysatoren sein. Vollkatalysatoren bestehen aus katalytisch aktivem Material. Trägerkatalysatoren können durch Beschichtung von inerten porösen keramischen oder metallischen Katalysatorträgern mit katalytisch aktiven Komponenten oder Precursoren von katalytisch aktiven Komponenten durch Tränken, Impragnieren, Sprühimprägnieren, Sprühtrocknen, Auffällen, Hicoaten, Washcoaten hergestellt werden.

Ferner betrifft die Erfindung monomodale oder polymodale Katalysatorträger oder Katalysatoren, herstellbar durch Verformen eines Gemisches aus
A) 15 bis 70 Vol.-%
   I) eines anorganischen Pulvers ausgewählt aus der Gruppe der Oxide, Nitride, Carbide, Silikate, Alumosilikate der Elemente Beryllium, Magnesium, Calcium, Strontium, Barium, Bor, Aluminium, Gallium, Indium, Thallium, Silicium, Germanium, Zinn, Blei, Antimon, Selen, Tellur, Polonium, Astat, Eisen, Cobalt, Nickel, Ruthenium, Rhodium, Palladium, Osmium, Iridium, Platin, Kupfer, Silber, Gold, Zink, Cadmium, Quecksilber, Scandium, Yttrium, Lanthan, Actinium, Titan, Zirkon, Hafnium, Vanadin, Niob, Tantal, Chrom, Molybdän, Wolfram, Mangan, Technetium, Rhenium, Cer, Praseodym oder deren Gemische und/oder
   II) eines metallischen Pulvers ausgewählt aus Metallen und Legierungen der Elemente Bor, Aluminium, Gallium, Indium, Thallium, Silicium, Germanium, Zinn, Blei, Antimon, Selen, Tellur, Polonium, Neodym, Samarium, Dysprosium, Astat, Eisen, Cobalt, Raney-Cobalt, Nickel, Raney-Nickel, Ruthenium, Rhodium, Palladium, Osmium, Iridium, Platin, Kupfer, Silber, Gold, Zink, Cadmium, Quecksilber, Scandium, Yttrium, Lanthan, Actinium, Titan, Zirkon, Hafnium, Vanadin, Niob, Tantal, Chrom, Molybdän, Wolfram, Mangan, Technetium, Rhenium, Cer, Praseodym, WC, TiC, TaC, VC oder deren Gemische, WC-Cobalt, TiC-Cobalt, TaC-Cobalt, VC-Cobalt oder deren Gemische sowie Kohlenstoff und/oder
   III) einer Aktivkomponente ausgewählt aus der Gruppe der anorganischen Säuren, der Metalle ausgewählt aus Lithium, Natrium, Kalium, Rubidium, Caesium, Francium, Beryllium, Magnesium, Calcium, Strontium, Barium, Bor, Aluminium, Gallium, Indium, Thallium, Silicium, Germanium, Zinn, Blei, Arsen, Antimon, Wismut, Selen, Tellur, Polonium, Astat, Eisen, Cobalt, Raney-Cobalt, Nikkel, Raney-Nickel, Ruthenium, Rhodium, Palladium, Osmium, Iridium, Platin, Kupfer, Silber, Gold, Zink, Cadmium, Quecksilber, Scandium, Yttrium, Lanthan, Actinium, Titan, Zirkon, Hafnium, Vanadin, Niob, Tantal, Chrom, Molybdän, Wolfram, Mangan, Technetium, Rhenium, Cer, Praseodym, deren Gemische, oder deren Boraten, Carbonaten, Silikaten, Nitraten, Phosphaten, Arsenaten, Antimonaten, Bismutaten, Sulfaten, Selenaten, Telluraten, Vanadaten, Molybdaten, Niobaten, Chromaten, Oxiden, Hydroxiden, Halogeniden, Sulfiden, Seleniden, Telluriden, Nitriden, Phosphiden, Arseniden, Acetate, Acetylacetonate, Palladate, Platinate, Cyanide, Rhodanide, Manganate, Rhenate, Osmate, Carbiden, Siliciden, Boriden, deren Ammoniumverbindungen oder deren Gemische und/oder
   IV) eines organischen Pulvers ausgewählt aus der Gruppe Teflon oder Polyimid
B) 30 bis 85 Vol.-% einer Mischung aus
   B₁) 50 bis 100 Gew.-% eines Polyoxymethylenhomo- oder copolymerisats und
   B₂) 0 bis 50 Gew.-% eines in B₁) homogen gelösten oder mit einer mittleren Teilchengröße von weniger als 1µm in B₁) dispergierten Polymerisats und
C) 0 bis 15 Vol.-% eines Dispergierhilfsmittels,

Entfernen des Bindemittels durch Behandlung mit einer gasförmigen Säure bei Temperaturen von 100 bis 160°C, Restpyrolyse bei Temperaturen von 400 bis 600°C und anschließendes Vorsintern bei Temperaturen von 600 bis 1400°C und gegebenenfalls Aufbringen von Aktivkomponenten III auf der Komponente A) oder auf der vorgesinterten Masse durch gegebenenfalls mehrfaches Tränken, Imprägnieren, Sprühimprägnieren, Auffallen, Hicoaten, Washcoaten oder Sprühtrocknen, dadurch gekennzeichnet, daß die Katalysatorträger oder Katalysatoren nach der pyrolytischen Entfernung des Binders eine spezifische Oberfläche nach BET von 0,01 bis 250 m²/g und eine Porengrößenverteilung von 50 bis 300.000 nm gemessen mit der Hg-Druckporosimetrie-Methode aufweisen.

Die erfindungsgemäßen Katalysatorträger oder Katalysatoren eignen sich in der Regel für den Einsatz bei:
- Reduktionen (Hydrierungen), beispielsweise:
   Hydrierung von Alkinen wie z.B. die selektive Hydrierung von Acetylen in C₂-, C₃-, C₄-Gemischen, die selektive Hydrierung von Vinylacetylen in C₄-Schnitten und die Hydrierung von Butindiol zu Butendiol oder Butandiol, die Hydrierungen von Alkenen wie z.B. die Hydrierung ungesättigter Verbindungen bei der Oxo-Synthese, die aminierende Hydrierung, die Aromatenhydrierung, die Diolefinhydrierung wie die Hydrierung von Diolefinen im Pyrolysebenzin, die Fetthydrierung, die hydrierende Entschwefelung wie die Hydrierung von anorganischen Schwefelverbindungen, z.B. COS, CS₂, SO₂ und Sₓ zu Schwefelwasserstoff, die hydrierende Raffination von Aromaten oder Paraffinen, die Hydrierung organischer Chlorverbindungen, die Hydrierung von Aldehyden, Carbonsäuren, Carbonsäureestern, Ketonen, Nitrilen, Nitroverbindungen, Oximen und Oxo-Produkten wie die Reduktion von Nitrobenzol zu Anilin, die Hydrierung von Carbonylgruppen und Aromaten z.B. zur Weißölerzeugung, die Hydrierung von Trimethylchinon zu Trimethylhydrochinon, die Hydrierung von Adipodinitril zu Hexamethylendiamin, Acrylnitril, NH₃ und die Hydrierung von Adipinsäure zu Hexandiol, die Hydrierung von Cyclohexylhydroperoxid zu Cyclohexanol, die Hydrierung von Citral zu Citronellal, die Herstellung von Lilial aus Dehydrolilial, die Entfernung von NOₓ aus Abgasen durch Reduktion mit Ammoniak und die Herstellung von Alkanen, Olefinen, Alkoholen, Aldehyden und/oder Carbonsäuren aus Synthesegas, die Hydrierung von Adipodinitril zu Aminocapronitril, die aminierende Hydrierung von Adipinsäure zu Aminocapronitril;
- Oxidationen (Dehydrierungen), beispielsweise:
   Oxidationen von Alkanen wie die Dehydrierung von Ethylbenzol zu Styrol oder Dimethylcyclohexylamin zu 2,6-Dimethylanilin, von Alkenen, von Alkoholen wie die Dehydrierung von Cyclohexanol zu Cyclohexanon und die Herstellung von Ethylhexansäure und Ethylhexanal aus Ethylhexenol, die Ammonoxidation wie die Herstellung von Cyanwasserstoff aus Methan oder von o-Xylol zu Phthalodinitril, von Aromaten, die Epoxidation, die oxidative Halogenierung, die oxidative Kupplung, Oxidation von schwefelwasserstoffhaltigen Gasen zu Schwefel nach dem Claus-Verfahren, die Herstellung von Vinylchlorid nach dem Oxychlorierungsprozeß (Stauffer-Verfahren), die Oxidation von Schwefelwasserstoff und/oder organischen Schwefelverbindungen zu Schwefeldioxid, die Herstellung von Schwefelsäure nach dem "Kontaktverfahren" aus SO₂-haltigen Gasen, die Herstellung von Phthalsäureanhydrid aus o-Xylol und Luft, die katalytische Verbrennung von Kohlenwasserstoffen, Lösungsmitteln bzw. CO-verunreinigtem Abgas, die Herstellung von Ethylendichlorid durch Oxychlorierung von Ethylen, die Oxidation von Propen zu Acrylsäure, die Herstellung von Methacrylsäure aus Methacrolein, die Herstellung von Methacrylsäure aus Isobuttersäure, die Dehydrierung von DMCHA zu Xylidin und die Dehydrierung von Trimethylcyclohexenon zu Trimethylphenol, die Oxidation von Ethylen zu Ethylenoxid, die Oxidation von Butadien zu Furan, die Oxidation von Propen zu Acrolein, die Oxidation von Methacrolein zu Methacrylsäure;
- sauer oder basisch katalysierte Reaktionen, beispielsweise:
   Alkoxylierungen z.B. von Ethylenoxid oder Propylenoxid, Dealkoxylierungen z.B. von N-Vinylformamid aus α-Methoxiethylformamid, Alkylierungen, Acylierungen, Hydratisierungen, Dehydratisierungen z.B. von Aziridin aus Ethanolamin oder von Blausäure aus Formamid, Aminierungen, Aldolreaktionen, Oligomerisierungen, Polymerisationen, Polymeranaloge Reaktionen, Cyclisierungen, Isomerisierungen, Veresterungen, Spaltung gasförmiger Kohlenwasserstoffe (Cracking) z.B. Erdgas mit Wasserdampf und gegebenenfalls CO₂, die Oxidation von Propen zu Acrolein, Eliminierungsreaktionen wie N-Formylalaninnitril zu N-Vinylformamid, Additiven wie Methanol oder Propin an α-Methoxygruppen.

Darüber hinaus eignen sich makroporöse Träger mit einer Porengröße zwischen 100 und 10.000 nm zur Entfernung von Verbrennungsrückständen (Ruß) aus Dieselabgasen und für Bioreaktoren in Zusammenhang mit der Verwendung von Bakterien (1 bis 2 µm).

Die nach dem erfindungsgemäßen Verfahren hergestellten Katalysatorträger oder Katalysatoren haben vergleichsweise hohe mechanische Festigkeiten und sind deshalb besonders für Wirbelschichtreaktionen geeignet.

Als Wirbelschichtreaktionen kommen z.B. in Frage für die Umlagerung von Cyclohexanonoxim zu ε-Caprolactam, die Ammonoxidationen, z.B. Toluol zu Benzonitril oder Propen zu Acrylnitril, die Herstellung von Maleinsäureanhydrid aus Buten oder die Herstellung von Anilin aus Nitrobenzol.

Demgemäß betrifft die Erfindung auch die Verwendung der erfindungsgemäßen Katalysatorträger und Katalysatoren zur Chlorherstellung aus Chlorwasserstoff in einem instationären Deacon-Prozeß, zur Umsetzung von Ethylbenzol zu Styrol in einer instationären Oxy-Dehydrierung, zur Aziridinherstellung aus Ethanolamin, zur Umsetzung von Trimethylcyclohexenon zu Trimethylphenol bei Reduktionen, Hydrierungen, Oxidationen, Dehydrierungen, sauer oder basisch katalysierten Reaktionen oder Reaktionen in der Wirbelschicht, zur Entfernung von Verbrennungsrückständen aus Dieselabgasen und zur Entfernung von NOₓ aus Abgasen, in Bioreaktoren gemeinsam mit Bakterien und als Biokatalysatorträger mit immobilisierten Enzymen oder Mikroben.

### Beispiele

### Beispiele 1 bis 9

Die Keramikpulver aus Tabelle I wurden mit einem Binder auf Polyacetalbasis, bestehend aus einem Polyoxymethylencopolymer (POM/PBDF) aus Trioxan und 2,5 Gew.-% Butandiolformal mit einem durchschnittlichen Molekulargewicht von 150.000, sowie mit 20 Gew.-% Polybutandiolformal mit einem Molekulargewicht von 50.000 und 5 Gew.-% (bez. auf das eingesetzte Pulver) Polyethylenglykol mit einem Molekulargewicht von 800 als Hilfsmittel, bei 180°C verknetet. Die Knetmasse der Pulver Nr. 1, 2, 7, 8 aus Tabelle I wurde mit einer Messermühle zu Granulat verarbeitet. Die Knetmasse der Pulver Nr. 3, 4, 5, 6, 9 aus Tabelle I wurde bei 180°C zu Strängen mit einem Durchmesser von 4 mm extrudiert. Die Granulate und die Stränge wurden in einem HERAEUS-Entbinderungsofen (60 l) mit 70 ml/h einer 5 Gew.-%igen Lösung von Oxalsäure in Essigsäure (99%ig) oder 30 ml/h 100%ige Salpetersäure bei 140°C unter einem N₂-Strom von 300 l/h 10 Stunden entbindert, wobei das Polyoxymethylen zu Formaldehyd depolymerisiert. Danach wurden die Stränge und das Granulat bei den in Tabelle II angegebenen Temperaturen an Luft im Muffelofen oder Drehrohrofen vorgesintert. Die Porenradienverteilungen und weitere Eigenschaften der Stränge und des Granulates sind den Tabellen IIIa und IIIb zu entnehmen.

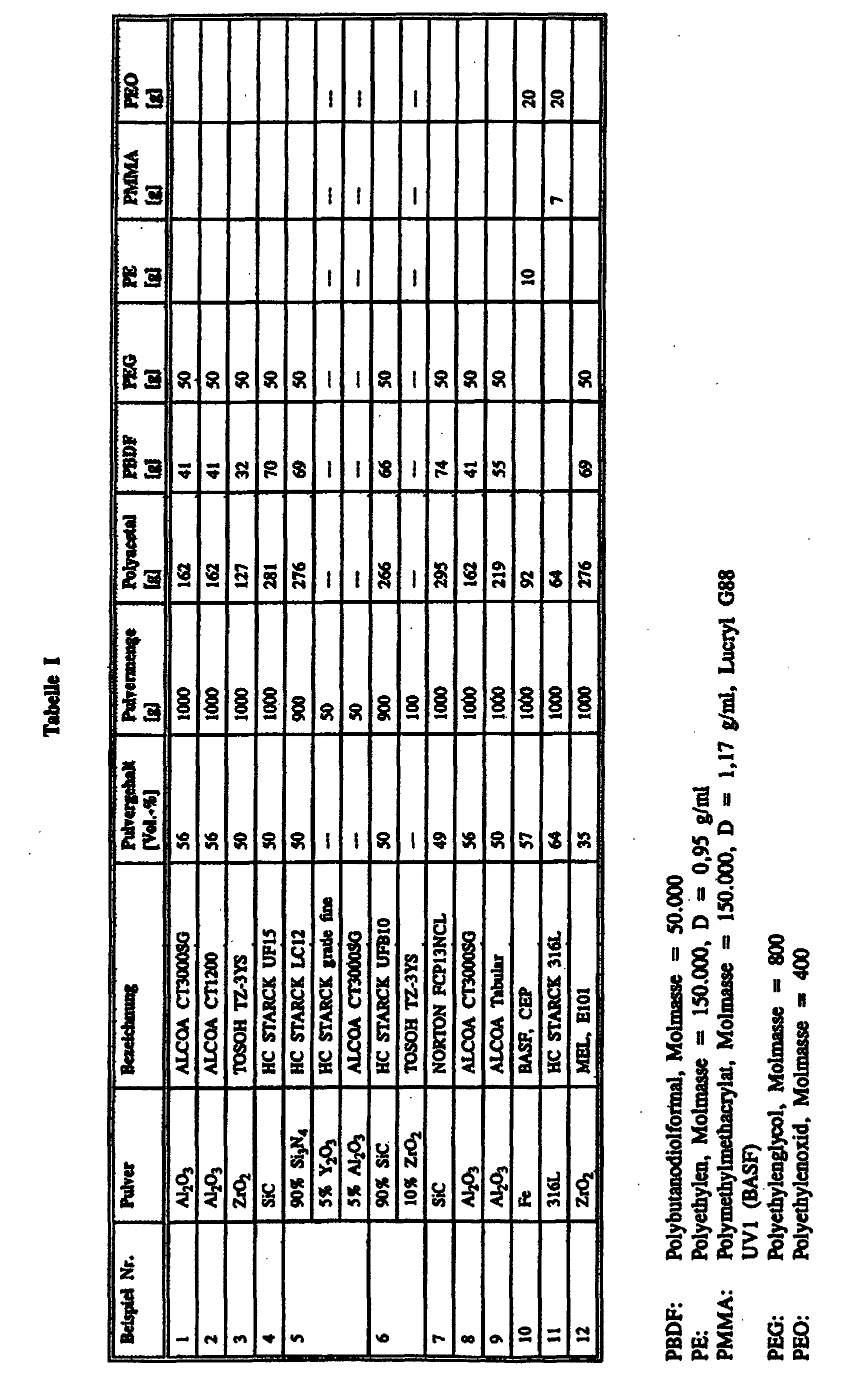

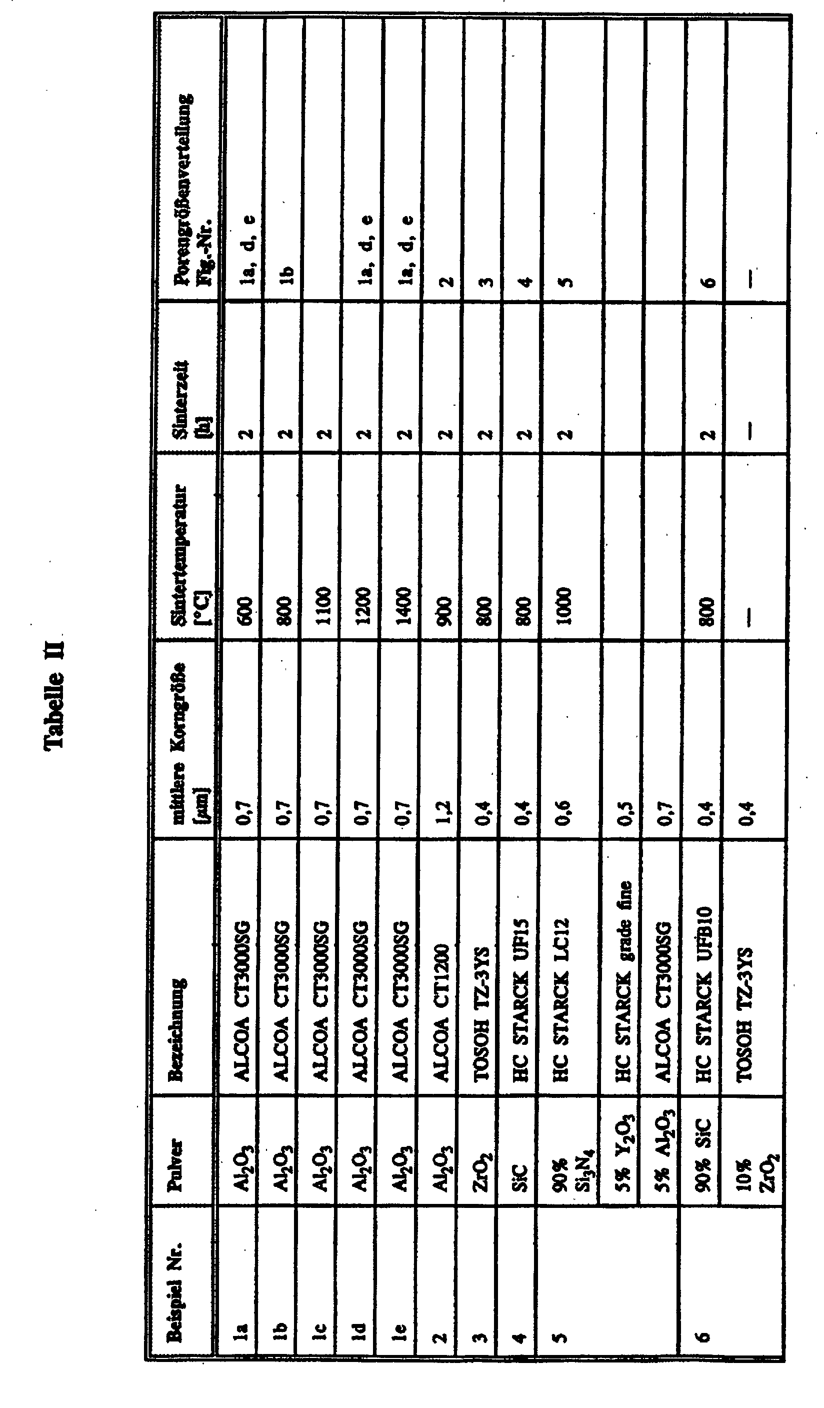

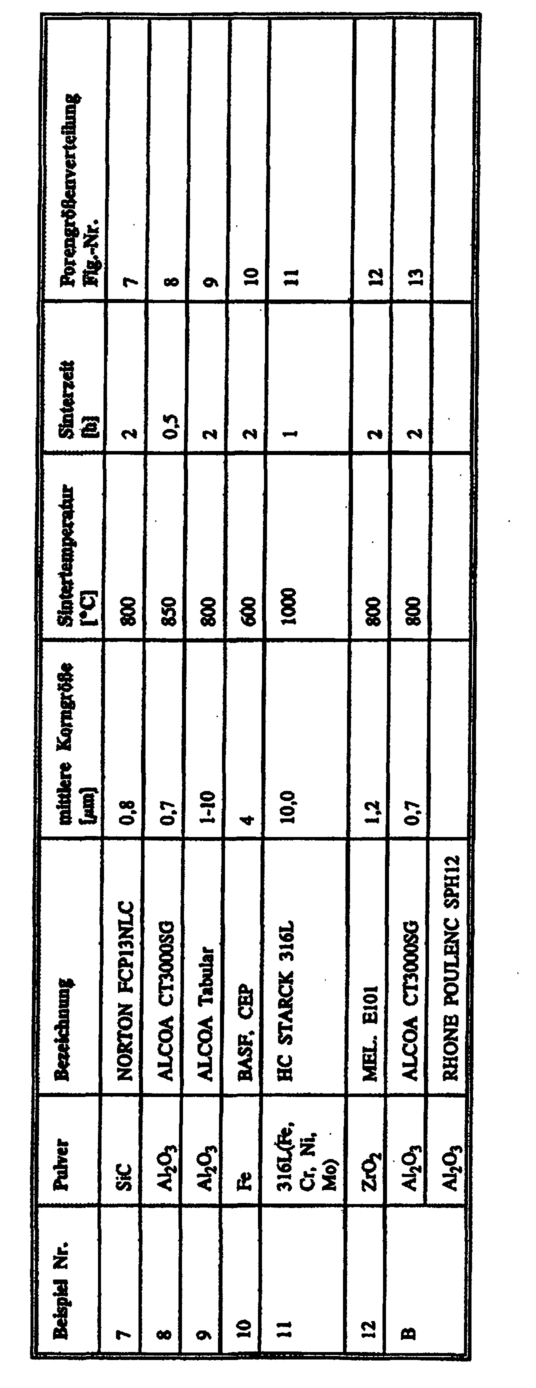

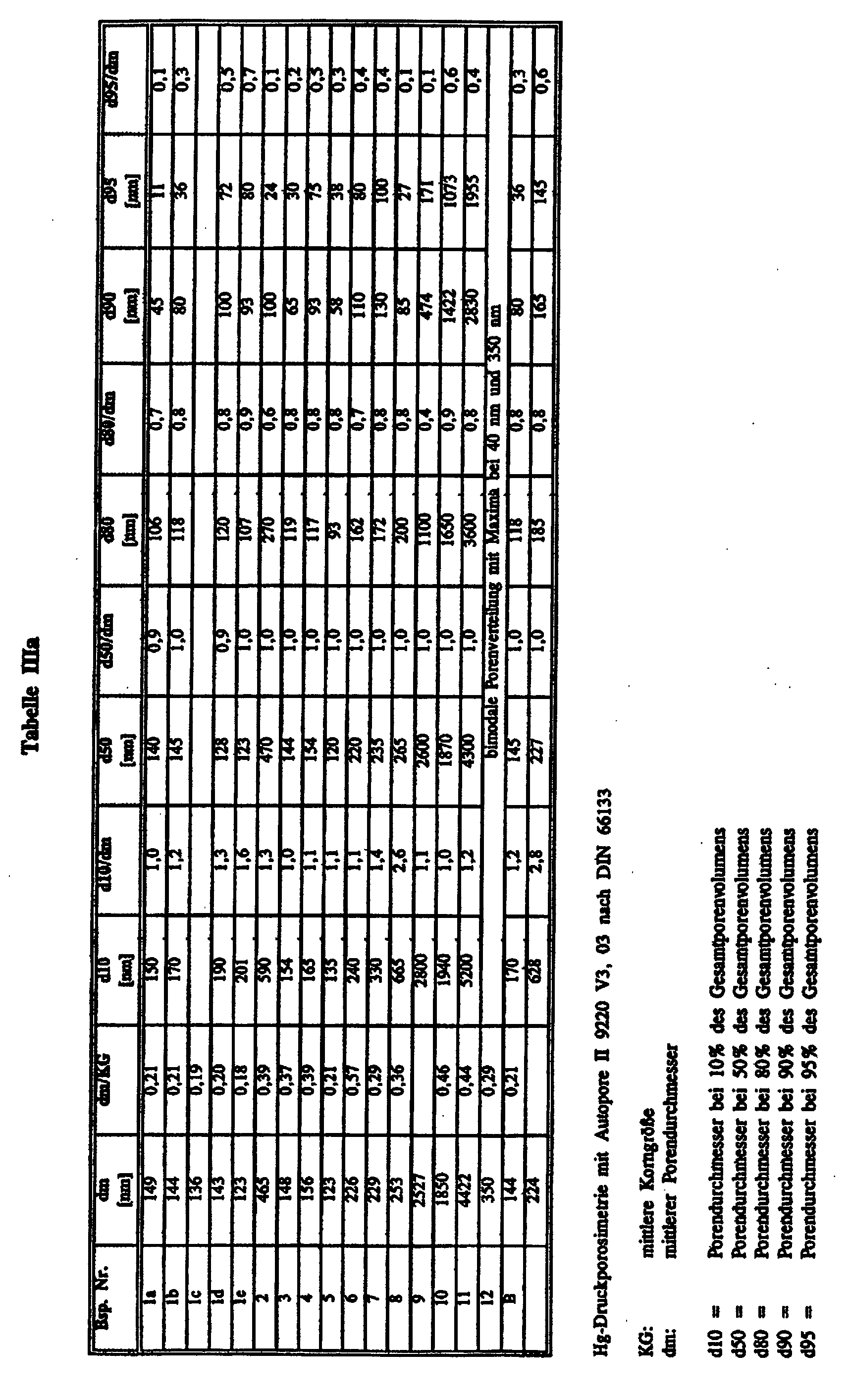

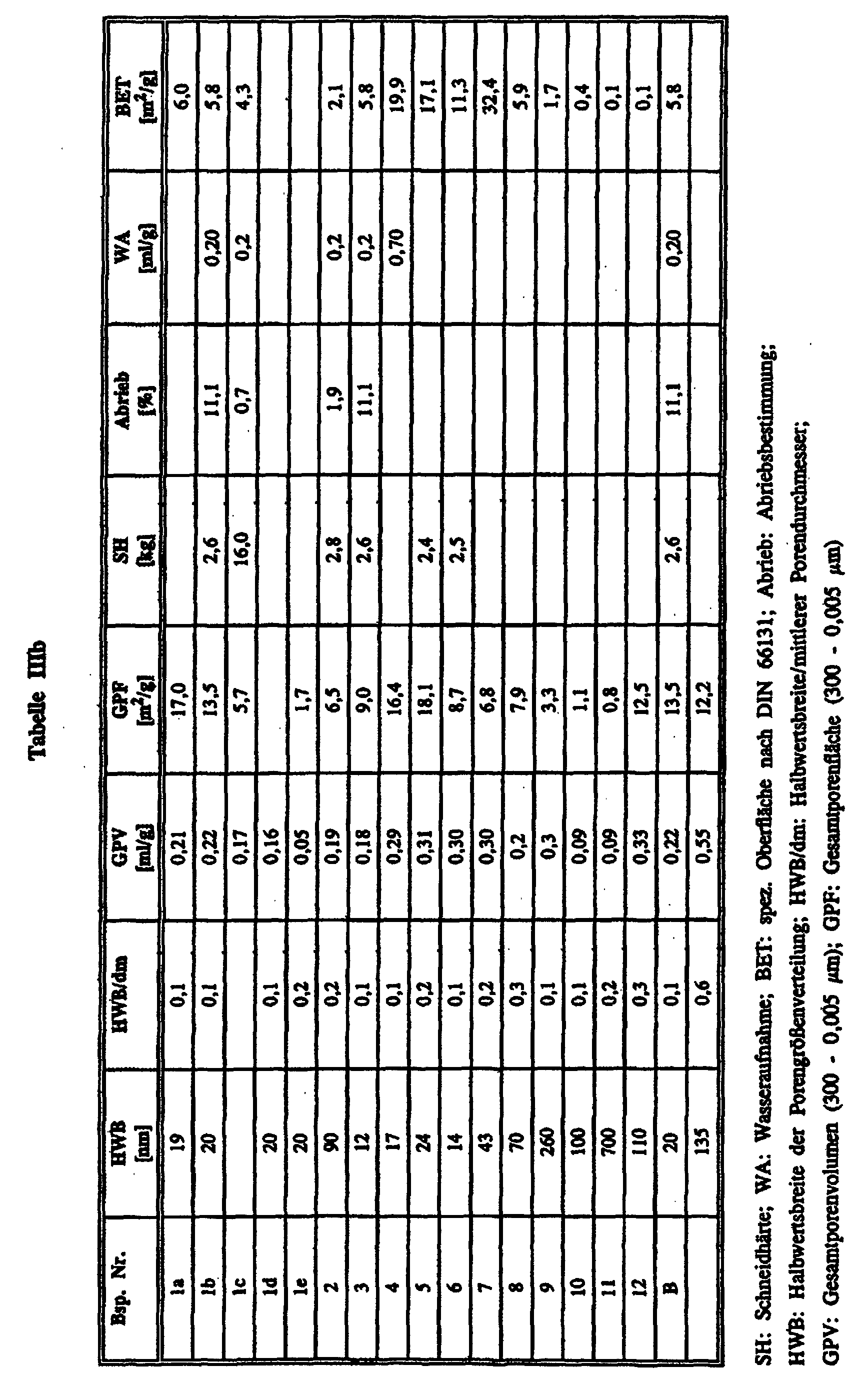

### Beispiele 10 und 11

Die Metallpulver Nr.10 (BASF, CEP) und Nr.11 (HC STARCK, 316L, Fe-Cr-Ni-Mo) aus Tabelle IV wurden mit einem Binder auf Polyacetalbasis, bestehend aus einem Polyoxymethylencopolymer (POM/PBDF) aus Trioxan und 1,5 Gew.-% Butandiolformal mit einem durchschnittlichen Molekulargewicht von 150.000, sowie mit etwa 10 Gew.-% Polyethylen bzw. Polymethylmethacrylat, beide mit einem Molekulargewicht von 150.000 und 2 Gew.-% (bez. auf das eingesetzte Pulver) Polyethylenoxid mit einem Molekulargewicht von 400 als Hilfsmittel, bei 180°C verknetet, über eine Kneteraustragsschnecke granuliert und in einem HERAEUS-Entbinderungsofen (60 l) mit 70 ml/h einer 5 Gew.-%igen Lösung aus Oxalsäure und Essigsäure (99%ig) oder 30 ml/h 100%ige Salpetersäure bei 140°C unter einem N₂-Strom von 300 l/h 10 Stunden entbindert, wobei das Polyoxymethylen zu Formaldehyd depolymerisiert. Danach wurde das Granulat bei den in Tabelle V angegebenen Temperaturen an Luft vorgesintert. Die Porenradienverteilungen und weitere Eigenschaften der Granulate sind den Tabellen VIa und VIb zu entnehmen.

### Beispiel 12

Das bimodale ZrO₂-Pulver (MEL, E101, 60% d. Teilchen d = 1,3 µm, 40% der Teilchen d < 1,0 µm) aus Tabelle IV, Nr.10 wurde bei 180°C zusammen mit einem Binder auf Polyacetalbasis extrudiert, granuliert und in einem HERAEUS-Entbinderungsofen (60 l) mit 55 ml/h einer 5 Gew.-%igen Lösung aus Oxalsäure und Essigsäure (99%ig) oder 30 ml/h 100%ige Salpetersäure bei 140°C unter einem N₂-Strom von 300 l/h 10 Stunden entbindert, wobei das Polyoxymethylen zu Formaldehyd depolymerisiert. Danach wurde das Granulat bei den in Tabelle V angegebenen Temperaturen an Luft vorgesintert. Die Porenradienverteilungen und weitere Eigenschaften des Granulates sind den Tabellen VIa und VIb zu entnehmen.

**Tabelle IV**

| Beispiel Nr. | Pulver | Bezeichnung [Vol.-%] | Pulvergehält [g] | Pulvermenge [g] | Polyacetal [g] | PBDF [g] | PE [g] | PMMA [g] | PEG [g] | PEO [g] |
|---|---|---|---|---|---|---|---|---|---|---|
| 10 | Fe | BASF CEP | 57 | 1000 | 92 | | 10 | | | 20 |
| 11 | 316L | HC STARCK 316L | 64 | 1000 | 64 | | | 7 | | 20 |
| 12 | ZrO₂ | MEL E101 | 35 | 1000 | 276 | 69 | | | 50 | |
| Polyacetal: Copolymer aus Trioxan und 2,5% Butandiolformal, Molmasse 150.000 | | | | | | | | | | |
| PBDF = Polybutandiolformal, Molmasse 50.000 | | | | | | | | | | |
| PE = Polyethylen, Molmasse 150.000, D=0,95g/ml | | | | | | | | | | |
| PMMA = Polymethylmethacrylat, Molmasse 150.000, D=1,17g/ml, Lucryl G88 UV1 [BASF] | | | | | | | | | | |
| PEG = Polyethylenglykol, Molmasse 800 | | | | | | | | | | |
| PEO = Polyethylenoxid, Molmasse 400 | | | | | | | | | | |

**Tabelle V**

| Beispiel Nr. | Pulver | Bezeichnung | mittlere Korngröße [µm] | Sintertemperatur [°C] | Sinterzelt [h] | Porengrößenverteilung Fig.-Nr. |
|---|---|---|---|---|---|---|
| 10 | Fe | BASF CEP | 4 | 600 | 2 | 10 |
| 11 | 316L | HC STARCK 316L | 10 | 1000 | 1 | 11 |
| 12 | ZrO₂ | MEL E101 | 0,9 | 800 | 2 | 12 |

**Tabelle VIa**

| Bsp Nr. | dm nm | dm/KG | d10 nm | d10/dm | d50 | d50/dm | d80 | d80/dm | d90 | d95 | d95/dm |
|---|---|---|---|---|---|---|---|---|---|---|---|
| 10 | 1850 | 0,46 | 1940 | 1,0 | 1870 | 1,0 | 1650 | 0,9 | 1422 | 1073 | 0,6 |
| 11 | 4422 | 0,44 | 5200 | 1,2 | 4300 | 1,0 | 3600 | 0,8 | 2830 | 1955 | 0,4 |
| 12 | 350/40 | 0,39 | bimodale Porenverteilung | | | | | | | | |
| Hg-Druckporosimetrie mit Autopore II 9220 V3.03 nach DIN 66133 | | | | | | | | | | | |
| KG = mittlere Korngröße | | | | | | | | | | | |
| dm = mittlerer Porendurchmesser | | | | | | | | | | | |
| d10 = Porendurchmesser bei 10% des Gesamtporenvolumens | | | | | | | | | | | |
| d50 = Porendurchmesser bei 50% des Gesamtporenvolumens | | | | | | | | | | | |
| d80 = Porendurchmesser bei 80% des Gesamtporenvolumens | | | | | | | | | | | |
| d90 = Porendurchmesser bei 90% des Gesamtporenvolumens | | | | | | | | | | | |
| d95 = Porendurchmesser bei 95% des Gesamtporenvolumens | | | | | | | | | | | |

**Tabelle VIb**

| Bsp. Nr. | HWB [nm] | HWB/dm | GPV [ml/g] | GPF [m²/g] | BET Oberfläche [m²/g] |
|---|---|---|---|---|---|
| 10 | 100 | 0,05 | 0,09 | 1,1 | 0,4 |
| 11 | 600 | 0,14 | 0,09 | 0,8 | 0,1 |
| 12 | | | 0,33 | 12,5 | |
| Hg-Druckporosimetrie mit Autopore II 9220 V3.03 nach DIN 66133 | | | | | |
| HWB = Halbwertsbreite der Porengrößenverteilung | | | | | |
| dm = mittlerer Porendurchmesser | | | | | |
| GPV = Gesamtporenvolumen (300 bis 0,005µm) | | | | | |
| GPF = Gesamtporenfläche (300 bis 0,005µm) | | | | | |

### Vergleichsbeispiel A

650g SiC (HC STARCK, UF15) wurden mit 150g H₂O und 48g HNO₃ 35 Minuten verknetet und bei 45 bis 150°C zu 4mm Strängen extrudiert.

Die Stränge wurden bei 800 und 1100°C an Luft calciniert. Dabei zerfielen die Stränge zu Pulver (Schneidhärte = 0 kg)

### Vergleichsbeispiel B

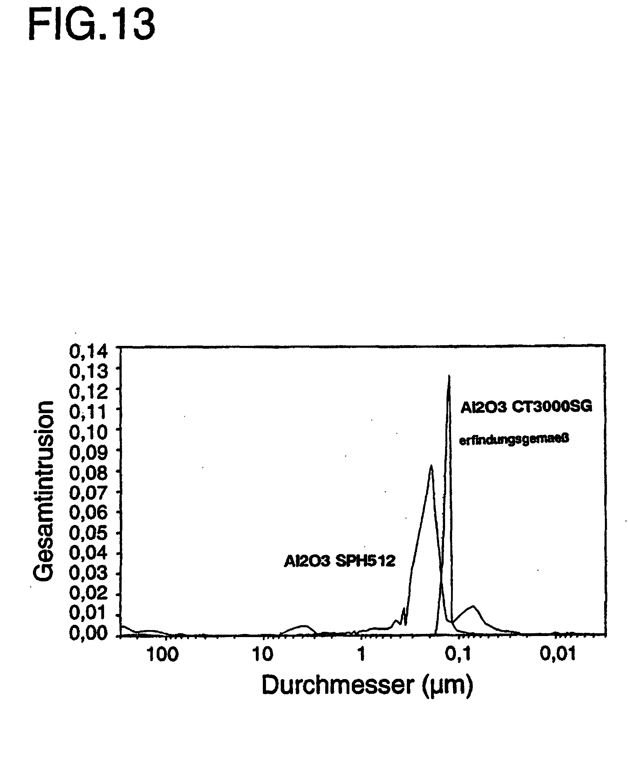

Der käufliche α-Al₂O₃-Katalysatorträger SPHS12 der Firma Rhone Poulenc hat bei einer vergleichbaren BET-Oberfläche von 5,4 m²/g und einem Gesamtporenvolumen von (GPV) von 0,51 ml/g eine wesentlich breitere Porenverteilung (siehe Fig. 13) als der erfindungsgemäße Al₂O₃-Katalysatorträger CT3000SG von ALCOA in Tabelle IIIa und IIIb, Beispiele Nr. 1b und Fig. 1b.

### Vergleichsbeispiel C

ZrO₂-Träger hat nach herkömmlichem Verkneten und Verstrangen eine geringere Härte.

300g ZrO₂-Pulver (Ausgangsprodukt aus Beispiel 3) der Firma TOSOH, TZ-3YS, und 9g Verstrangungshilfsmittel wurden mit 31 ml Wasser versetzt, in einem Kneter für 2,5 h verdichtet und anschließend im Extruder zu 3 mm Vollsträngen verformt. Die Stränge wurden 2h bei 120°C getrocknet und anschließend 2h bei 800°C unter Luft calciniert (gleiche Calciniertemperatur wie bei Beispiel 3).

An den Vollsträngen wurden folgende Eigenschaften gemessen:

| **Beispiel** | **C** | **3** |
|---|---|---|
| Schneidhärte [kg] | 0,6 | 2,6 |
| BET-Oberfläche [m²/g] | 5,8 | 5,8 |
| Wasseraufnahme [ml/g] | 0,22 | 0,19 |
| Stampfgewicht [g/ml] | 1,455 | 1,543 |

### Vergleichsbeispiel D

Wesentlich geringere Härte eines herkömmlichen ZrO₂-Trägers auch bei hohen Calciniertemperaturen.

100g oberflächenreiches Zr(OH)₄ (BET: 310 m²/g) wurde mit 3g Verstrangungshilfsmittel und 45ml Wasser versetzt und 1,5h im Kneter verdichtet. Verstrangungsversuche zur Formgebung dieses ZrO₂-Trägers gelangen nicht, da die Stränge schon beim Trocknen wieder zu Pulver zerfielen (Schneidhärte = 0 kg). Daher wurde die unverstrangte Knetmasse 2h bei 500°C calciniert. Die BET-Oberfläche des Pulvers nach der Calcinierung bei 500°C betrug 69,8 m²/g. Nach der Calcinierung (2h bei 800°C) ergab sich eine BET-Oberfläche von 11,2 m²/g.

### Beispiel 13 [instationärer Deacon-Prozeß]

### Katalysator: Cu-K-Fe-Na auf SiC-Träger

### Herstellung des SiC-Trägers:

1000 g SiC (NORTON, FCP-13-NLC) wurden mit einem Binder auf Polyacetalbasis, bestehend aus 281 g Polyoxymethylencopolymer (POM/PDF) aus Trioxan und 2,5 Gew.-% Butandiolformal mit einem durchschnittlichen Molekulargewicht von 150.000, sowie mit 70 g Polybutandiolformal mit einem Molekulargewicht von 50.000 und 50 g Polyethylenglykol mit einem Molekulargewicht von 800 als Hilfsmittel, bei 180°C verknetet, extrudiert, granuliert und in einem HERAEUS-Entbinderungsofen (60 l) mit 70 ml/h einer 5 gew.-%igen Lösung von Oxalsäure in Essigsäure (99%ig) oder 30 ml/h 100%ige Salpetersäure bei 140°C unter einem N₂-Strom von 300 l/h 10 h entbindert. Danach wurde das Granulat bei 600°C 2 h unter N₂ vorgesintert. Man erhielt einen SiC-Träger mit einer BET-Oberfläche von 17,1 m²/g und einer Wasseraufnahme von 0,342 ml/g.

### Tränkung des SiC-Trägers:

300 g des SiC-Trägers wurden zweimal mit jeweils 102,6 ml einer Lösung aus 95,99 g CuCl₂*2H₂O, 41,97g KCl gelöst in destilliertem Wasser (Gesamtlösung 205,2 ml) imprägniert, 16 h bei 120°C (nach jedem Tränkschritt) getrocknet und 3 h bei 450°C calciniert.

307 g des zuvor getränkten SiC-Trägers wurden dreimal mit jeweils 105 ml einer Lösung aus 37,39 g NaCl und 172,99 g FeCl₃*6H₂O gelöst in destilliertem Wasser (Gesamtlösung 315 ml) imprägniert, 16h bei 120°C (nach jedem Tränkschritt) getrocknet und 3 h bei 450°C calciniert. Man erhielt ein rotbraunes Granulat der chemischen Zusammensetzung 8,1 Gew.-% Eisen und 6,4 Gew.-% Kupfer.

### Allgemeine Vorschrift zur instationären Chlorherstellung:

In einem beheizten Röhrenreaktor mit 20 ml Katalysator-Festbett-Schüttung wurde eine Splittfraktion von 0,5 bis 1 mm eingefüllt. Nach der Beladephase mit einem trockenen HCl-Strom und anschließender Spülphase mit Inertgas (N₂ oder CO₂) wurde mit Luft oder reinem Sauerstoff regeneriert (dechloriert). Dieser Zyklus wurde wiederholt.

Durch eine on-line IR-Analytik wurde die HCl-Konzentration und durch eine on-line UV-Analytik wurde die Chlorkonzentration mit hoher Zeitauflösungkontinuierlich gemessen. Die integrale Chlormenge, die während der Dechlorierung freigesetzt wurde, konnte zur Kontrolle zusätzlich noch naßchemisch (jodometrisch) ermittelt werden.

Die Ergebnisse sind in Tabelle VII zusammengefaßt.

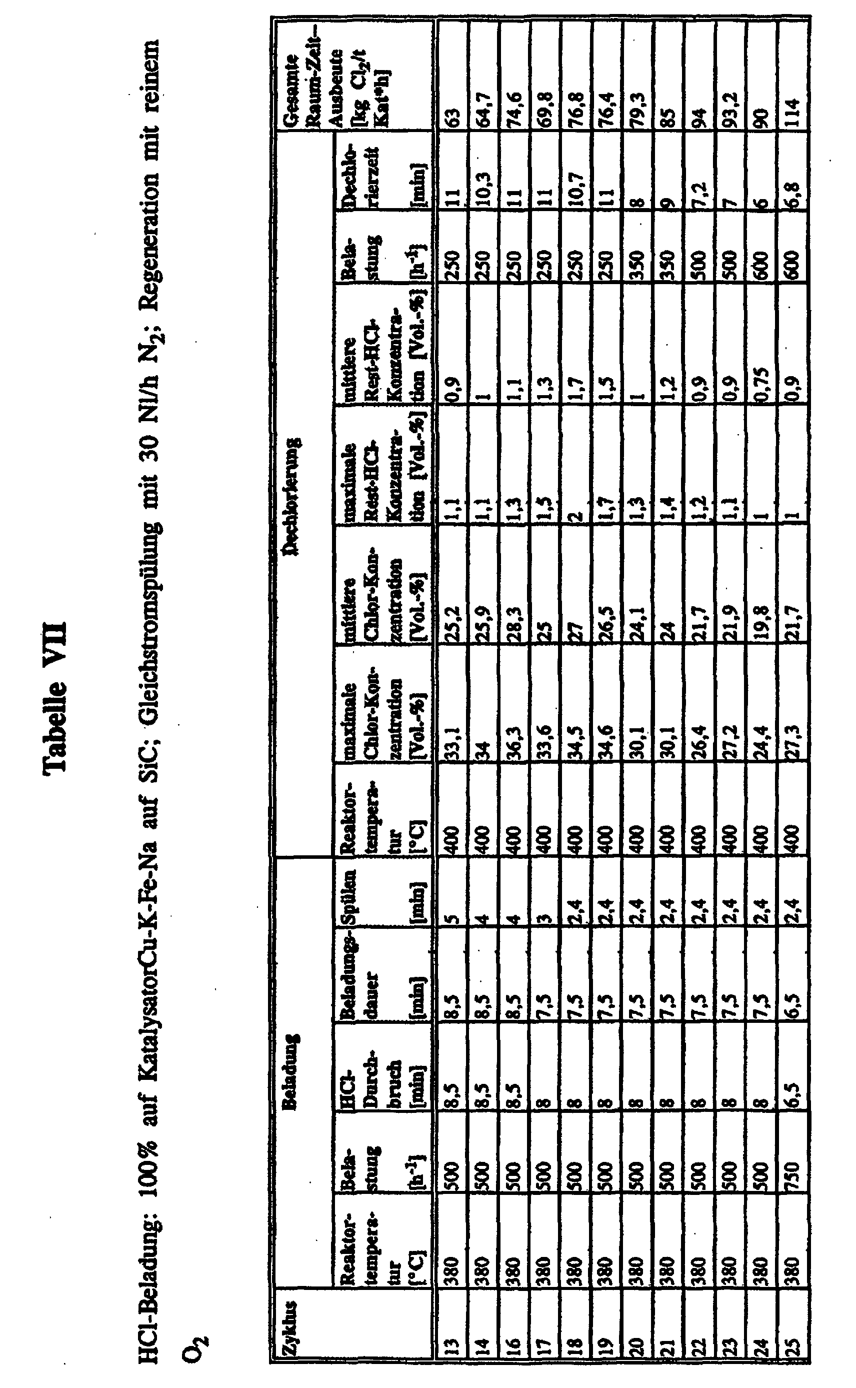

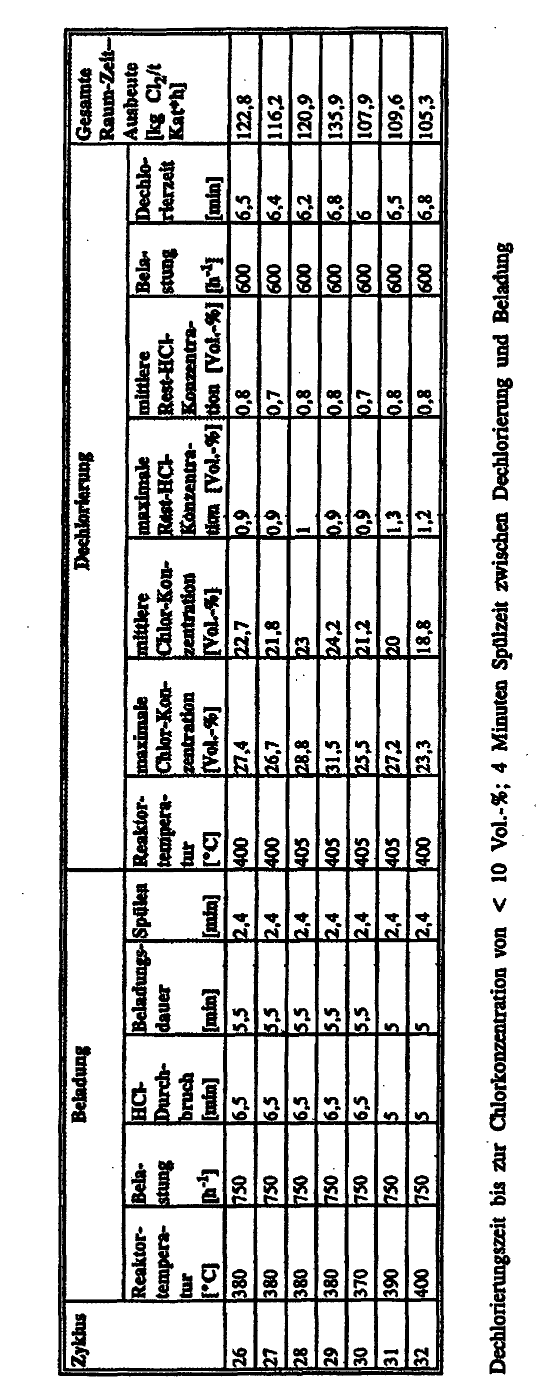

### Vergleichsbeispiel E [instationärer Deacon-Prozeß]:

### Vergleichskatalysator: (Cu-Fe-K auf Al₂O₃-Träger)

200 g Al₂O₃ (Pural SCF Ringe) wurden mit 92 ml einer Lösung aus 32,16 g CuCl₂*2H₂O, 58 g FeCl₃*6H₂O, 30 g KCl und 114 ml Wasser getränkt (Wasseraufnahme: 0,46 ml/g), 16h bei 120°C getrocknet, 3 h bei 450°C calciniert und anschließend mit den restlichen 85 ml der Lösung getränkt, 16 h bei 120°C getrocknet und 3 h bei 450°C calciniert. Der Vergleichskatalysator C enthielt 3,8 Gew.-% Cu und 4,5 Gew.-% Fe; Stampfgewicht: 0,974 g/ml (9,5 bis 1 mm Splitt); BET-Oberfläche: 68,6 m²/g.

Beim Versuch, den Kontakt ein drittes Mal zu tränken, zerfiel dieser.

### Vergleichsbeispiel F

### Cu-Fe-K auf Al₂O₃-Träger

Analog der allgemeinen Vorschrift zur instationären Chlorherstellung wurde der Vergleichskatalysator Cu-Fe-K auf Al₂O₃ bei 365°C und HCl-Gasflüssen zwischen 4 bis 5 Nl/h mit 25% HCl (höhere HCl-Konzentrationen hielt der Träger nicht aus) bei einer HCl-Durchbruchszeit von 10 bis 14 Minuten beladen. Die Dechlorierung erfolgte mit 20 Nl/h Luft bei einer Regeneriertemperatur von 365°C mit Dechlorierungszeiten von 60 Minuten und einer integralen Chlormenge von 0,9 g, woraus sich eine Raum-Zeit-Ausbeute von 34 kg Chlor/t Kat.* h ergab.

Erfolgte die Dechlorierung mit 20 Nl/h Luft bei einer Regeneriertemperatur von 380°C, wurden Dechlorierungszeiten von 35 Minuten und eine integrale Chlormenge von 0,7 g gefunden, woraus sich eine Raum-Zeit-Ausbeute von 38 kg Chlor/t Kat.* h ergab.

Bei einer Reaktortemperatur von 400°C bei der Beladung und bei der Dechlorierung erhielt man eine maximale Chlorkonzentration von 8 Vol.-% Cl₂ und eine mittlere Chlorkonzentration von 4 Vol.-% Cl₂ bei Dechlorierzeiten (bis < 2 Vol.-% Chlor) von 25 Minuten. Die freigesetzte Chlormenge betrug integral 1 g. Die maximal gemessene Raum-Zeit-Ausbeute betrug 40 kg Chlor/t Kat.* h.

## Patentansprüche

1. Monomodale oder polymodale Katalysatorträger oder Katalysatoren, die eine spezifische Oberfläche nach BET von 0,01 bis 250m²/g, ein Porenvolumen von 0,05 bis 5 ml/g, eine Schneidhärte von 1 bis 8 kg bei 800°C vorgesinterten Proben und eine monomodale oder eine polymodale Porengrößenverteilung mit einem mittleren Porendurchmesser von 50 bis 300.000 nm gemessen mit der Hg-Druckporosimetrie-Methode aufweisen und
a) 10 bis 95% des Porenvolumens bei dem 0,1- bis 3-fachen und/oder
b) 10 bis 80% des Porenvolumens bei dem 0,4- bis 3-fachen und/oder
c) 50 bis 95% des Porenvolumens bei dem 0,1- bis 1-fachen und/oder
d) 50 bis 80% des Porenvolumens bei dem 0,4- bis 1-fachen des mittleren Porendurchmessers liegt und
e) die Halbwertsbreite der Porengrößenverteilung weniger als das 0,5-fache des modalen Porendurchmessers beträgt.

2. Verfahren zur Herstellung von Katalysatorträgem oder Katalysatoren, nach Anspruch 1, durch verformen eines Gemisches aus
A) 15 bis 70 Vol.-%
I) eines anorganischen Pulvers ausgewählt aus der Gruppe der Oxide, Nitride, Carbide, Silikate, Alumosilikate der Elemente Beryllium, Magnesium, Calcium, Strontium, Barium, Bor, Aluminium, Gallium, Indium, Thallium, Silicium, Germanium, Zinn, Blei, Antimon, Selen, Tellur, Polonium, Astat, Eisen, Cobalt, Nickel, Ruthenium, Rhodium, Palladium, Osmium, Iridium, Platin, Kupfer, Silber, Gold, Zink, Cadmium, Quecksilber, Scandium, Yttrium, Lanthan, Actinium, Titan, Zirkon, Hafnium, Vanadin, Niob, Tantal, Chrom, Molybdän, Wolfram, Mangan, Technetium, Rhenium, Cer, Praseodym oder deren Gemische und/oder
II) eines metallischen Pulvers ausgewählt aus Metallen und Legierungen der Elemente Bor, Aluminium, Gallium, Indium, Thallium, Silicium, Germanium, Zinn, Blei, Antimon, Selen, Tellur, Polonium, Neodym, Samarium, Dysprosium, Astat, Eisen, Cobalt, Raney-Cobalt, Nickel, Raney-Nickel, Ruthenium, Rhodium, Palladium, Osmium, Iridium, Platin, Kupfer, Silber, Gold, Zink, Cadmium, Quecksilber, Scandium, Yttrium, Lanthan, Actinium, Titan, Zirkon, Hafnium, Vanadin, Niob, Tantal, Chrom, Molybdän, Wolfram, Mangan, Technetium, Rhenium, Cer, Praseodym, WC, TiC, TaC, VC oder deren Gemische, WC-Cobalt, TiC-Cobalt, TaC-Cobalt, VC-Cobalt oder deren Gemische sowie Kohlenstoff und/oder
III) einer Aktivkomponente ausgewählt aus der Gruppe der anorganischen Säuren, der Metalle ausgewählt aus Lithium, Natrium, Kalium, Rubidium, Caesium, Francium, Beryllium, Magnesium, Calcium, Strontium, Barium, Bor, Aluminium, Gallium, Indium, Thallium, Silicium, Germanium, Zinn, Blei, Arsen, Antimon, Wismut, Selen, Tellur, Polonium, Astat, Eisen, Cobalt, Raney-Cobalt, Nikel, Raney-Nickel, Ruthenium, Rhodium, Palladium, Osmium, Iridium, Platin, Kupfer, Silber, Gold, Zink, Cadmium, Quecksilber, Scandium, Yttrium, Lanthan, Actinium, Titan, Zirkon, Hafnium, Vanadin, Niob, Tantal, Chrom, Molybdän, Wolfram, Mangan, Technetium, Rhenium, Cer, Praseodym, deren Gemische, oder deren Boraten, Carbonaten, Silikaten, Nitraten, Phosphaten, Arsenaten, Antimonaten, Bismutaten, Sulfaten, Selenaten, Telluraten, Vanadaten, Molybdaten, Niobaten, Chromaten, Oxiden, Hydroxiden, Halogeniden, Sulfiden, Seleniden, Telluriden, Nitriden, Phosphiden, Arseniden, Acetate, Acetylacetonate, Palladate, Platinate, Cyanide, Rhodanide, Manganate, Rhenate, Osmate, Carbiden, Siliciden, Boriden, deren Ammoniumverbindungen oder deren Gemische und/oder
IV) eines organischen Pulvers ausgewählt aus der Gruppe Teflon oder Polyimid
B) 30 bis 85 Vol.-% einer Mischung aus
B₁) 50 bis 100 Gew.-% eines Polyoxymethylenhomo- oder copolymerisats und
B₂) 0 bis 50 Gew.-% eines in B₁) homogen gelösten oder mit einer mittleren Teilchengröße von weniger als 1µm in B₁) dispergierten Polymerisats und
C) 0 bis 15 Vol.-% eines Dispergierhilfsmittels,
Entfernen des Bindemittels und anschließendes Vorsintern und gegebenenfalls Aufbringen von Aktivkamponenten III auf der Komponente A) oder auf der vorgesinterten Masse durch gegebenenfalls mehrfaches Tränken, Imprägnieren, Sprühimprägnieren, Auffällen, Hicoaten, Washcoaten oder Sprühtrocknen, **dadurch gekennzeichnet, daß** die Komponente A) ein nanokristallines Pulver mit einer mittleren Korngröße von 5 nm bis 500.000 nm ist, wobei die Abweichungen der Korngröße bei 80% der Körner 0 bis 30% der mittleren Korngröße betragen und das Bindemittel durch Behandlung mit einer gasförmigen Säure bei Temperaturen von 100 bis 160°C und Restpyrolyse bei Temperaturen von 400 bis 600°C entfernt wird und anschließend bei Temperaturen von 600 bis 1400°C vorgesintert wird und die Katalysatorträger oder Katalysatoren nach der pyrolytischen Entfernung des Binders eine spezifische Oberfläche nach BET von 0,01 bis 250 m²/g und eine Porengrößenverteilung von 50 bis 300.000 nm gemessen mit der Hg-Druckporosimetrie-Methode aufweisen.

3. Verfahren nach Anspruch 2, **dadurch gekennzeichnet, daß** man Pulver mit polymodaler Komgrößenverteilung oder mit innerer Porosität einsetzt.

4. Verfahren nach Anspruch 2 oder 3, **dadurch gekennzeichnet, daß** man als Metall Aluminium, Eisen, Cobalt, Nickel, Palladium, Platin, Kupfer, Silber, Molybdän, Zink, Titan, Zirkon, Wolfram, Niob, Chrom oder Kohlenstoff oder als anorganisches Pulver Al₂O₃, MgO, SiO₂, TiO₂, Y₂O₃, ZrO₂, ZnO, Fe₃O₄, Fe₂O₃, CoO, Co₂O₃, Cr₂O₃, NiO, B₂O₃, Ce₂O₃, CeO₂, Pr₂O₃, B₄C, SiC, WC, TiC, TaC, Si₃N₄, AlN, BN, TiN, ZrN, oder deren Gemische einsetzt.

5. Verfahren nach einem der Ansprüche 2 bis 4, **dadurch gekennzeichnet, daß** man als Metall Eisen, Cobalt, Nickel, Chrom, Molybdän, Titan oder als anorganisches Pulver SiC, Si₃N₄, BN, B₄C, WC, TiC, TiN, ZrN und AlN, oder deren Gemische einsetzt.

6. Verfahren nach einem der Ansprüche 2 bis 5, **dadurch gekennzeichnet, daß** man als anorganisches Pulver SiC, Si₃N₄ oder deren Gemische einsetzt

7. Verfahren nach einem der Ansprüche 2 bis 6, **dadurch gekennzeichnet, daß** man die Mischung aus A), B) und C) durch Granulieren, Pressen, Walzen, Extrusion, Spritzguß oder Strangguß bei 80 bis 250°C verformt.

8. Verfahren nach einem der Ansprüche 2 bis 7, **dadurch gekennzeichnet, daß** man zur Entfernung des Bindemittels als Säure Salpetersäure, Oxalsäuredihydrat, wasserfreie Oxalsäure, Essigsäure, Ameisensäure oder deren Gemische oder Bortrifluorid einsetzt.

9. Verfahren nach einem der Ansprüche 2 bis 8, **dadurch gekennzeichnet, daß** man die Verformung so durchführt, daß diese als Schüttung von Einzelteilen oder als Monolithe in Form von Raschig-Ringen, Sattelkörpern, Sternringen, gelochten und/oder gerippten geometrischen Körpern wie Ringen, Kugeln, Quadern, Würfeln, Kegeln, Pyramiden, Prismen, Oktaedern, Zylindern, Pyramidenstümpfen und Kegelstümpfen, Wagenräderprofilen, Fensterrahmenprofilen oder Honigwabenprofilen, anfallen.

10. Verwendung eines Katalysatorträgers oder Katalysators gemäß Anspruch loder eines monomodalen oder polymodalen Katalysatorträgers oder Katalystors, hergestellt nach einem Verfahren gemäß einem der Ansprüche 2 bis 9, zur Chlorherstellung aus Chlorwasserstoff in einem instationären Deacon-Prozeß, zur Umsetzung von Ethylbenzol zu Styrol in einer instationären Oxy-Dehydrierung, zur Aziridinherstellung aus Ethanolamin, zur Umsetzung von Trimethylcyclohexenon zu Trimethylphenol, bei Reduktionen, Hydrierungen, Oxidationen, Dehydrierungen, sauer oder basisch katalysierten Reaktionen oder Reaktionen in der Wirbelschicht, zur Entfernung von Verbrennungsrückständen aus Dieselabgasen und zur Entfernung von NOₓ aus Abgasen, in Bioreaktoren gemeinsam mit Bakterien und als Biokatalysatorträger mit immobilisierten Enzymen oder Mikroben.

## Claims

1. A monomodal or polymodal catalyst support or catalyst having a BET specific surface area of from 0.01 to 250 m²/g, a pore volume of from 0.05 to 5 ml/g, a cutting hardness of from 1 to 8 kg of specimens presintered at 800°C and a monomodal or polymodal pore size distribution having a mean pore diameter of from 50 to 300,000 nm measured by the mercury pressure porosimetry method, wherein
a) from 10 to 95 % of the pore volume is at from 0.1 to 3 times the mean pore diameter and/or
b) from 10 to 80 % of the pore volume is at from 0.4 to 3 times the mean pore diameter and/or
c) from 50 to 95 % of the pore volume is at from 0.1 to 1 times the mean pore diameter and/or
d) from 50 to 80 % of the pore volume is at from 0.4 to 1 times the mean pore diameter and
e) the width at half height of the pore size distribution is less than 0.5 times the mean pore diameter.

2. A process for producing catalyst supports or catalysts as claimed in claim 1, by shaping a mixture of
A) from 15 to 70 % by volume of
I) an inorganic powder selected from the group of oxides, nitrides, carbides, silicates, aluminosilicates of the elements beryllium, magnesium, calcium, strontium, barium, boron, aluminum, gallium, indium, thallium, silicon, germanium, tin, lead, antimony, selenium, tellurium, polonium, astatine, iron, cobalt, nickel, ruthenium, rhodium, palladium, osmium, iridium, platinum, copper, silver, gold, zinc, cadmium, mercury, scandium, yttrium, lanthanum, actinium, titanium, zirconium, hafnium, vanadinium, niobium, tantalum, chromium, molybdenum, tungsten, manganese, technetium, rhenium, cerium, praseodymium or mixtures thereof and/or
II) a metallic powder selected from among metals and alloys of the elements boron, aluminum, gallium, indium, thallium, silicon, germanium, tin, lead, antimony, selenium, tellurium, polonium, neodymium, samarium, dysprosium, astatine, iron, cobalt, Raney cobalt, nickel, Raney nickel, ruthenium, rhodium, palladium, osmium, iridium, platinum, copper, silver, gold, zinc, cadmium, mercury, scandium, yttrium, lanthanum, actinium, titanium, zirconium, hafnium, vanadinium, niobium, tantalum, chromium, molybdenum, tungsten, manganese, technetium, rhenium, cerium, praseodymium, WC, TiC, TaC, VC or mixtures thereof, WC-cobalt, TiC-cobalt, TaC-cobalt, VC-cobalt or mixtures thereof and also carbon and/or
III) an active component selected from the group of the inorganic acids, the metals selected from among lithium, sodium, potassium, rubidium, cesium, francium, beryllium, magnesium, calcium, strontium, barium, boron, aluminum, gallium, indium, thallium, silicon, germanium, tin, lead, arsenic, antimony, bismuth, selenium, tellurium, polonium, astatine, iron, cobalt, Raney cobalt, nickel, Raney nickel, ruthenium, rhodium, palladium, osmium, iridium, platinum, copper, silver, gold, zinc, cadmium, mercury, scandium, yttrium, lanthanum, actinium, titanium, zirconium, hafnium, vanadinium, niobium, tantalum, chromium, molybdenum, tungsten, manganese, technetium, rhenium, cerium, praseodymium, mixtures thereof, or their borates, carbonates, silicates, nitrates, phosphates, arsenates, antimonates, bismutates, sulfates, selenates, tellurates, vanadates, molybdates, niobates, chromates, oxides, hydroxides, halides, sulfides, selenides, tellurides, nitrides, phosphides, arsenides, acetates, acetylacetonates, palladates, platinates, cyanides, thiocyanates, manganates, rhenates, osmates, carbides, silicides, borides, their ammonium compounds or their mixtures and/or
IV) an organic powder selected from the group teflon or polyimide
B) from 30 to 85 % by volume of a mixture of
B₁) from 50 to 100 % by weight of a polyoxymethylene homopolymer or copolymer and
B₂) from 0 to 50 % by weight of a polymer homogeneously dissolved in B1) or dispersed in B1) at a mean particle size of less than 1 mm and
C) from 0 to 15 % by volume of a dispersant,
removing the binder and subsequent presintering and, if desired, applying active components III to the component A) or to the presintered composition by single or multiple steeping, impregnation, spray impregnation, precipitating on, hicoating, washcoating or spray drying, wherein component A) is a nanocrystalline powder with a mean particle size of from 5 nm to 500,000 nm, with the particle size of 80 % deviating by from 0 to 30 % from the mean particle size, and the binder is removed by treatment with a gaseous acid at from 100 to 160°C and residue pyrolysis at from 400 to 600°C and then presintered at from 600 to 1400°C, and the catalyst support or catalyst after the pyrolytic removal of the binder has a BET specific surface area of from 0.01 to 250 m²/g and a pore size distribution of from 50 to 300,000 nm measured by the mercury pressure porosimetry method.

3. A process as claimed in claim 2, wherein powder having a polymodal particle size distribution or having internal porosity is used.

4. A process as claimed in claim 2 or 3, wherein aluminium, iron, cobalt, nickel, palladium, platinum, copper, silver, molybdenum, zinc, titanium, zirconium, tungsten, niobium, chromium or carbon is used as metal or Al₂O₃, MgO, SiO₂, TiO₂, Y₂O₃, ZrO₂, ZnO, Fe₃O₄, Fe₂O₃, CoO, Co₂O₃, Cr₂O₃, NiO, B₂O₃, Ce₂O₃, CeO₂, Pr₂O₃, B₄C, SiC, WC, TiC, TaC, Si₃N₄, AlN, BN, TiN, ZrN or a mixture thereof is used as inorganic powder.

5. A process as claimed in any of claims 2 to 4, wherein iron, cobalt, nickel, chromium, molybdenum, titanium is used as metal or SiC, Si₃N₄, BN, B₄C, WC, TiC, TiN, ZrN or AlN or a mixture thereof is used as inorganic powder.

6. A process as claimed in any of claims 2 to 5, wherein SiC, Si₃N₄ or a mixture thereof is used as inorganic powder.

7. A process as claimed in any of claims 2 to 6, wherein the mixture of A), B) and C) is shaped by granulation, pressing, rolling, extrusion, injection molding or continuous casting at from 80 to 250°C.

8. A process as claimed in any of claims 2 to 7, wherein nitric acid, oxalic acid dihydrate, anhydrous oxide acid, acetic acid, formic acid or a mixture thereof or boron trifluoride is used as acid for removing the binder.

9. A process as claimed in any of claims 2 to 8, wherein the shaping is carried out such that they are obtained as a bed of individual parts or as monolith in the form of Raschig rings, saddles, star rings, perforated and/or ribbed geometric bodies such as rings, spheres, cuboids, cubes, cones, pyramids, prisms, octahedra, cylinders, truncated pyramids or truncated cones, wagon wheel profiles, window frame profiles, honeycomb profiles.

10. Use of a catalyst support or catalyst as claimed in claim 1 or of a monomodal or polymodal catalyst support or catalyst produced by the process as claimed in any of claims 2 to 9 for preparing chlorine from hydrogen chloride in a non-steady-state Deacon process, for the reaction of ethylbenzene to give styrene in a non-steady-state oxydehydrogenation, for preparing aziridine from ethanolamine, for the reaction of trimethylcyclohexenone to give trimethylphenol, in reductions, hydrogenations, oxidations, dehydrogenations, acid- or base-catalyzed reactions or reactions in a fluidized bed, for removing combustion residues from diesel exhaust gases and for removing NOₓ from waste gases, in bioreactors together with bacteria and as biocatalyst supports with immobilized enzymes or microbes.

## Revendications

1. Supports de catalyseurs ou catalyseurs monomodaux ou polymodaux qui présentent une surface spécifique selon BET de 0,01 à 250 m²/g, un volume des vides de 0,05 à 5 ml/g, une trempe de 1 à 8 kg dans le cas d'échantillons soumis à un frittage préalable à 800 °C et une distribution porométrique monomodale ou polymodale avec un diamètre moyen des pores de 50 à 300.000 nm, mesurée avec le procédé de porosimétrie sous pression de mercure, et
a) de 10 à 95 % du volume des vides représentant de 0,1 à 3 fois et/ou
b) de 10 à 80 % du volume des vides représentant de 0,4 à 3 fois et/ou
c) de 50 à 95 % du volume des vides représentant de 0,1 à 1 fois et/ou
d) de 50 à 80 % du volume des vides représentant de 0,4 à 1 fois le diamètre moyen des pores et
e) la largeur de valeur moyenne de la distribution porométrique représentant moins de 0,5 fois le diamètre modal des pores.

2. Procédé pour la fabrication de support de catalyseurs ou de catalyseurs, selon la revendication 1, par façonnement d'un mélange comprenant
A) à concurrence de 15 à 70 % en volume
l) une poudre inorganique choisie parmi le groupe des oxydes, des nitrures, des carbures, des silicates, des aluminosilicates des éléments de béryllium, de magnésium, de calcium, de strontium, de baryum, de bore, d'aluminium, de gallium, d'indium, de thallium, de silicium, de germanium, d'étain, de plomb, d'antimoine, de sélénium, de tellure, de polonium, d'astate, de fer, de cobalt, de nickel, de ruthénium, de rhodium, de palladium, d'osmium, d'iridium, de platine, de cuivre, d'argent, d'or, de zinc, de cadmium, de mercure, de scandium, d'yttrium, de lanthane, d'actinium, de titane, de zirconium, de hafnium, de vanadium, de niobium, de tantale, de chrome, de molybdène, de tungstène, de manganèse, de technétium, de rhénium, de cérium, de praséodyme ou de leurs mélanges et/ou
II) une poudre métallique choisie parmi des métaux et des alliages des éléments du bore, de l'aluminium, du gallium, de l'indium, du thallium, du silicium, du germanium, de l'étain, du plomb, de l'antimoine, du sélénium, du tellure, du polonium, du néodyme, du samarium, du dysprosium, de l'astate, du fer, du cobalt, du cobalt de Raney, du nickel, du nickel de Raney, du ruthénium, du rhodium, du palladium, de l'osmium, de l'iridium, du platine, du cuivre, de l'argent, de l'or, du zinc, du cadmium, du mercure, du scandium, de l'yttrium, du lanthane, de l'actinium, du titane, du zirconium, du hafnium, du vanadium, du niobium, du tantale, du chrome, du molybdène, du tungstène, du manganèse, du technétium, du rhénium, du cérium, du praséodyme, du WC, du TiC, du TaC, du VC ou de leurs mélanges, du WC-cobalt, du TiC-cobalt, du TaC-cobalt, du VC-cobalt ou de leurs mélanges, ainsi que du carbone et/ou
III) un composant actif choisi parmi le groupe comprenant des acides inorganiques, des métaux choisis parmi le lithium, le sodium, le potassium, le rubidium, le césium, le francium, le béryllium, le magnésium, le calcium, le strontium, le baryum, le bore, l'aluminium, le gallium, l'indium, le thallium, le silicium, le germanium, l'étain, le plomb, l'arsenic, l'antimoine, le bismuth, le sélénium, le tellure, le polonium, l'astate, le fer, le cobalt, le cobalt de Raney, le nickel, le nickel de Raney, le ruthénium, le rhodium, le palladium, l'osmium, l'iridium, le platine, le cuivre, l'argent, l'or, le zinc, le cadmium, le mercure, le scandium, l'yttrium, le lanthane, l'actinium, le titane, le zirconium, le hafnium, le vanadium, le niobium, le tantale, le chrome, le molybdène, le tungstène, le manganèse, le technétium, le rhénium, le cérium, le praséodyme, leurs mélanges ou encore de leurs borates, de leurs carbonates, de leurs silicates, de leurs nitrates, de leurs phosphates, de leurs arséniates, de leur antimoniates, de leurs bismuthates, de leurs sulfates, de leurs séléniates, de leurs tellurates, de leurs vanadates, de leurs molybdates, de leurs niobiates, de leurs chromates, de leurs oxydes, de leurs hydroxydes, de leurs halogénures, de leurs sulfures, de leurs séléniures, de leurs tellures, de leurs nitrures, de leurs phosphures, de leurs arséniures, de leurs acétates, de leurs acétylacétonates, de leurs palladates, de leurs platinates, de leurs cyanures, de leurs rhodaniures, de leurs manganates, de leurs rhénates, de leurs osmiates, de leurs carbures, de leurs siliciures, de leur borures, de leurs composés d'ammonium ou de leurs mélanges et/ou
IV) une poudre organique choisie parmi le groupe comprenant le Téflon ou le polyimide
B) à concurrence de 30 à 85 % en volume, un mélange comprenant
B1) à concurrence de 50 à 100 % en poids, un homopolymère ou un copolymère de polyoxyméthylène et
B2) à concurrence de 0 à 50 % en poids, un polymère dissous de manière homogène dans B1) ou dispersé dans B1) avec une granulométrie moyenne inférieure à 1 µm et
C) à concurrence de 0 à 15 % en volume, un adjuvant de mise en dispersion,
par élimination du liant et par frittage préalable ultérieur et, le cas échéant, par application de composants actifs III sur le composant A) ou sur la matière soumise à un frittage préalable, via immersion, imprégnation, imprégnation par pulvérisation, précipitation, via le procédé HiCoat, via le procédé WashCoat ou via séchage par pulvérisation, lesdites opérations étant le cas échéant répétées, **caractérisé en ce que** le composant A) est une poudre de dimension nanocristalline possédant une granulométrie moyenne de 5 nm à 500.000 nm, les écarts par rapport à la granulométrie, dans 80 % des grains, représentant de 0 à 30 % de la granulométrie moyenne et le liant étant éliminé par traitement avec un acide gazeux à des températures de 100 à 160 °C et par pyrolyse résiduelle à des températures de 400 à 600 °C, avant d'être soumis à un frittage préalable à des températures de 600 à 1.400 °C, les supports de catalyseurs ou les catalyseurs présentant, après élimination du liant par pyrolyse, une surface spécifique selon BET de 0,01 à 250 m²/g et une distribution porométrique de 50 à 300.000 nm, mesurée avec le procédé de porosimétrie sous pression de mercure.

3. Procédé selon la revendication 2, **caractérisé en ce qu'**on met en oeuvre des poudres possédant une distribution porométrique polymodale ou possédant une porosité interne.

4. Procédé selon la revendication 2 ou 3, **caractérisé en ce qu'**on met en oeuvre, à titre de métal, de l'aluminium, du fer, du cobalt, du nickel, du palladium, du platine, du cuivre, de l'argent, du molybdène, du zinc, du titane, du zirconium, du tungstène, du niobium, du chrome ou bien du carbone ou encore, à titre de poudre inorganique, du Al₂O₃, du MgO, du SiO₂, du TiO₂, du Y₂O₃, du ZrO₂, du ZnO, du Fe₃O₄, du Fe₂O₃, du CoO, du Co₂O₃, du Cr₂O₃, du NiO, du B₂O₃, du Ce₂O₃, du CeO₂, du Pr₂O₃, du B₄C, du SiC, du WC, du TiC, du TaC, du Si₃N₄, du AlN, du BN, du TiN, du ZrN ou leurs mélanges.

5. Procédé selon une quelconque des revendications 2 à 4, **caractérisé en ce qu'**on met en oeuvre à titre de métal, du fer, du cobalt, du nickel, du chrome, du molybdène, du titane ou, à titre de poudre inorganique, du SiC, du Si₃N₄, du BN, du B₄C, du WC, du TiC, du TiN, du ZrN et du AIN ou leurs mélanges.

6. Procédé selon l'une quelconque des revendications 2 à 5, **caractérisé en ce qu'**on met en oeuvre, à titre de poudre inorganique, du SiC, du Si₃N₄ ou leurs mélanges.

7. Procédé selon l'une quelconque des revendications 2 à 6, **caractérisé en ce qu'**on soumet le mélange comprenant A), B) et C) à un façonnement par granulation, par pressage, par laminage, par extrusion, par moulage par injection ou par moulage par extrusion à une température de 80 à 250 °C.

8. Procédé selon l'une quelconque des revendications 2 à 7, **caractérisé en ce que**, pour l'élimination du solvant, on met en oeuvre, à titre d'acide, de l'acide nitrique, le dihydrate de l'acide oxalique, de l'acide oxalique anhydre, de l'acide acétique, de l'acide formique ou leurs mélanges, ou encore du trifluorure de bore.

9. Procédé selon l'une quelconque des revendications 2 à 8, **caractérisé en ce qu'**on procède au façonnement de telle sorte que l'on obtient un produit en vrac de particules individuelles ou des monolithes sous la forme d'anneaux de Raschig, de corps en forme de selles, d'anneaux en étoile, de corps géométriques perforés et/ou nervurés tels que des anneaux, des sphères, des parallélépipèdes, des cubes, des cônes, des pyramides, des prismes, des octaèdres, des cylindres, des pyramides tronquées et des cônes tronqués, des profilés en forme de roues de voitures, des profilés en forme d'encadrements de fenêtres ou des profilés en forme de nids d'abeilles.

10. Utilisation d'un support de catalyseur ou d'un catalyseur selon la revendication 1 ou encore d'un support de catalyseur ou d'un catalyseur monomodal au polymodal, fabriqué conformément à un procédé selon l'une quelconque des revendications 2 à 9, pour la fabrication du chlore à partir d'acide chlorhydrique dans un procédé instationnaire de Deacon, pour la conversion d'éthylbenzène en styrène dans une installation instationnaire d'oxydation-déshydrogénation, pour la fabrication d'aziridine à partir d'éthanolamine, pour la conversion de triméthylcyclohexénone en triméthylphénol, lors de réductions, d'hydrogénations, d'oxydations, de déshydrogénations, de réactions catalysées par un acide ou par une base ou encore de réactions en lits fluidisés, pour l'élimination de résidus de la combustion de gaz d'échappement de moteurs diesel ou encore pour l'élimination des NOx de gaz d'échappement, dans des bioréacteurs de manière conjointe avec les bactéries, et à titre de support de biocatalyseur comprenant des enzymes ou des microbes à l'état immobilisé.
